# EUROPÄISCHE PATENTSCHRIFT

(11) **EP 4 345 554 B1**
(45) Veröffentlichungstag und Bekanntmachung des Hinweises auf die Patenterteilung: **04.12.2024**
(21) Anmeldenummer: 22199162.3
(22) Anmeldetag: 30.09.2022
(51) Int. Cl.: G05B 19/418

(54) **VERFAHREN FÜR EINE COMPUTER-GESTÜTZTE INSTALLATION VON RÄUMLICH DEZENTRAL ANGEORDNETEN, ELEKTRISCHEN KOMPONENTEN EINER MASCHINE**
METHOD FOR COMPUTER-ASSISTED INSTALLATION OF ELECTRICAL COMPONENTS OF A MACHINE ARRANGED IN A SPATIALLY DECENTRALISED MANNER
PROCÉDÉ D'INSTALLATION ASSISTÉE PAR ORDINATEUR DE COMPOSANTS ÉLECTRIQUES D'UNE MACHINE AGENCÉS DE MANIÈRE DÉCENTRALISÉE DANS L'ESPACE

(43) Veröffentlichungstag der Anmeldung: 03.04.2024
(73) Patentinhaber: Murrelektronik GmbH, 71570 Oppenweiler (DE)
(72) Erfinder: Dr.-Ing. VIETHEN, Ulrich, 84184 Tiefenbach (DE); Dr.-Ing. ZELLER, Paul, 74223 Flein (DE); PFESTORF, Sebastian, Oppenweiler 71570 (DE)
(74) Vertreter: Goebel, Sebastian

(56) Entgegenhaltungen:
- EP-A1- 3 244 286
- EP-A1- 3 798 775
- WO-A1-2012/109593
- WO-A1-2022/020787

## Beschreibung

### Technisches Gebiet

Die vorliegende Erfindung betrifft allgemein das Gebiet der Planung und Montage von Maschinen wie Automatisierungsanlagen, und eine computer-gestützte Installation von räumlich dezentral angeordneten, elektrischen Komponenten einer Maschine.

### Hintergrund

Die Komplexität und Vielfalt von Automatisierungsanlagen, die entwickelt, geplant, installiert, gewartet, und repariert werden müssen, wird immer größer. In allen Phasen des Lebenszyklus einer solchen Anlage wie der Entwicklung/Planung, Produktion, Inbetriebsetzung, Betrieb und Wartung wird eine effiziente und effektive Unterstützung für einen Installateur oder Planer durch eine umfangreiche und vor allem vollständige Dokumentation immer wichtiger. Diesem Anspruch wird die in der Praxis vorliegende Dokumentation, beispielsweise in Form von Schaltplänen, allerdings nicht immer gerecht, da durch schlecht aufeinander abgestimmte Arbeitsprozesse oder durch die Verwendung von schlecht aufeinander abgestimmten Dokumentationstools Installationsaktivitäten nicht ausreichend oder nicht vollständig eingetragen werden. Diese bekannten Umstände führen zwangsläufig zu Dokumentationslücken in der Anlagendokumentation, was eine zuverlässige Wartung oder Reparatur einer Anlage erschwert bzw. im schlimmsten Fall unmöglich macht. Die Druckschrift EP 3 244 286 A1 offenbart ein computerimplementiertes Verfahren, ein Computerprogrammprodukt und ein Computersystem zum Installieren eines ersten physikalischen Elements auf oder in einem zweiten physikalischen Element. In der weiteren Druckschrift WO 2022/020787 A1 werden Techniken für die Verwaltung elektrischer Geräte beschrieben. Die Ausführungsformen umfassen ein Verfahren zur Verwaltung der Nachrüstung von elektrischen Geräten.

Es ist daher eine Aufgabe, die der Erfindung zugrunde liegt, ein computer-gestütztes Verfahren und ein System bereitzustellen, um eine einfachere, schnellere, sichere und fehlerfreie Installation von elektrischen Komponenten zu ermöglichen und dabei die oben genannten Nachteile des Standes der Technik zumindest teilweise zu überwinden.

### Zusammenfassung der Erfindung

Die voranstehende Aufgabe wird gelöst durch ein Verfahren, System, Computerprogramm sowie eine Vorrichtung zur Datenverarbeitung gemäß den unabhängigen Patentansprüchen.

Weitere Merkmale und Details der Erfindung ergeben sich aus den jeweiligen Unteransprüchen, der Beschreibung und den Zeichnungen.

Gegenstand der Erfindung ist ein Verfahren für eine computer-gestützte elektrische, Installation von räumlich dezentral angeordneten elektrischen Komponenten einer Maschine, in der Form einer Anlage.

Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einem Werker.

Die elektrischen Komponenten können Verbindungsmodule sein, welche eine dezentrale und modulare Verbindung von Installationselementen ermöglichen. Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann z. B. von einer Modul-Modul oder Modul-Hub-Punkt-Verbindung gesprochen werden. Grundsätzlich können bei einer Maschine bspw. die folgenden Komponenten vorgesehen sein: Geräte wie Aktoren und/oder Sensoren, die Verbindungsmodule, Installationselemente, bspw. zur Verkabelung.

Das erfindungsgemäße Verfahren kann dabei die nachfolgenden Schritte umfassen, wobei die Schritte automatisiert ausgeführt werden
- Empfangen eines, Identifikators eines Installationselements in der Form eines Kabels oder eines Bauteils,
- Bereitstellen einer, Installationsvorgabe, welche eine Zuordnung des Installationselements zur Verbindung mit einer elektrischen Komponente, in der Form eines Verbindungsmoduls zur Verbindung mit dem Installationselement und weiteren Installationselementen, spezifiziert,
- Identifizieren der elektrischen Komponente anhand der bereitgestellten Installationsvorgabe; und
- Initiieren einer Ausgabe wenigstens einer Installationsinformation basierend auf dem empfangenen Identifikator und der identifizierten Komponente, wobei die Schritte des Verfahrens automatisiert ausgeführt werden, wobei die wenigstens eine Installationsinformation eine Installationsanweisung zur Unterstützung eines Benutzers bei der Installation umfasst, wobei das Initiieren der Ausgabe zumindest einen der nachfolgenden Schritte umfasst:
   - Initiieren einer Aktivierung eines Anzeigeelements an der elektrischen Komponente;
   - Initiieren einer Anzeige einer Anschlussstelle der elektrischen Komponente für das Installationselement auf einer Benutzeroberfläche eines Computers;
   - Initiieren einer Anzeige einer Anschlussstelle der elektrischen Komponente für das Installationselement mittels Erweiterter Realität;lnitiieren einer Ausgabe der Installationsanweisung als eine Anweisung für den Benutzer, das Installationselement an eine bestimmte Anschlussstelle der elektrischen Komponente anzuschließen,
   - Initiieren einer akustischen Ausgabe der Installationsanweisung als eine Anweisung für den Benutzer, der Installationselement an eine bestimmte Anschlussstele der elektrischen Komponente anzuschließen.

Damit ermöglicht das Verfahren eine einfachere, schnellere und fehlerfreie Zuordnung von Installationselementen zu Komponenten und kann damit einen Benutzer für die Installation der Maschine wesentlich unterstützen und den Prozess vereinfachen. Ferner kann auf diese Weise ein Unterstützungssystem zur Installation, insbesondere zur Verkabelung, räumlich direkt an der identifizierten Komponente zur geführten Orientierung des Benutzers bereitgestellt werden, bei welchem eine Datenverarbeitungsvorrichtung die Verfahrensschritte automatisiert ausführen kann. Die Datenverarbeitungsvorrichtung, insbesondere eine erfindungsgemäße Vorrichtung zur Datenverarbeitung, kann dabei vorteilhafterweise mit einzelnen Komponenten kommunizieren und damit die Ausgabe der Installationsinformation ermöglichen. Hierzu kann die Datenverarbeitungsvorrichtung wenigstens eine Schnittstelle für die Kommunikation aufweisen.

Ein Benutzer kann bspw. ein Installateur und/oder Anlagenmechaniker und/oder Elektriker und/oder Werker und/oder Planer und/oder mechanischer Konstrukteur oder Entwickler und/oder elektrischer Konstrukteur oder Entwickler und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren über einen Computer für den Benutzer bereitgestellt wird. Hierzu kann ein Computerprogramm zumindest teilweise durch den Computer und/oder einen weiteren Computer ausgeführt werden, um die erfindungsgemäßen Verfahrensschritte durchzuführen.

Ferner ist es möglich, dass mehrere Benutzer simultan oder zumindest teilweise gleichzeitig das erfindungsgemäße Verfahren anwenden. Entsprechend können die Schritte eines erfindungsgemäßen Verfahrens auch mehrfach und/oder zumindest teilweise zeitlich parallel durchgeführt werden. Bspw. werden für mindestens zwei oder mindestens drei oder mindestens vier Benutzer jeweils die Schritte zumindest teilweise gleichzeitig ausgeführt.

Für die Installation der Maschine können mehrere Installationselemente vorgesehen sein. Diesen Installationselementen kann jeweils ein Identifikator zugeordnet sein, durch welchen die Installationselemente eindeutig identifiziert werden können. Der Identifikator kann entsprechend eine Information sein, welche bspw. digital verarbeitet werden kann. Das jeweilige Installationselement kann den Identifikator dadurch aufweisen, dass ein physisches Identifikationsmittel am Installationselement vorgesehen und/oder angebracht ist. Die Installationselemente können bspw. Kabel oder Bauteile sein, welche ein funktionaler Teil der Maschine sind. Der Identifikator umfasst vorteilhafterweise eine eindeutige und insbesondere eineindeutige Kennung. Damit ist es möglich, das Installationselement anhand des Identifikators eindeutig im Zusammenhang mit der Maschine und/oder auch weiteren Maschinen und/oder der Installation der Maschine zu identifizieren. Dem Identifikator können eine oder mehrere Informationen über das Installationselement zugewiesen werden. Die wenigstens eine Information kann wenigstens eine der nachfolgenden Informationen umfassen: wenigstens eine Zustandsinformation, die ausgegebene Installationsinformation, eine Kennung der identifizierten Komponente, wenigstens eine der nachfolgend noch näher beschriebenen Dokumentationsspezifikationen wie Bauteiltyp, Maschinentyp, Anlagentyp, Benutzer, Anschlussstellenbezeichnung, Zeitstempel Datum und Uhrzeit, Installationsdauer, Adresse in einem Bussystem, Betriebsmittelkennzeichnung, Kabellänge, Portbelegung, Eigenschaften des offenen Kabels, Temperatur, Luftfeuchtigkeit, aktueller Projektstand bei der Montage, Planabweichung und Grund. Eine digitale Hinterlegung der wenigstens einen Information zugeordnet zu dem Identifikator ermöglicht es somit, einen digitalen Zwilling des Installationselements zu schaffen. Auf diese Weise kann eine passive Smartifizierung des Installationselements ermöglicht werden.

Unter einer Smartifizierung versteht man insbesondere eine Erweiterung eines Industrieprodukts wie beispielsweise eine Komponente und/oder ein Bauteil und/oder ein Installationselement, wie z.B. ein Kabel, um intelligente Eigenschaften. Mit Hilfe von Informationstechnologien kann es ermöglicht werden, dass Komponenten Daten verarbeiten und zusätzliche Mehrwerte bieten können. Eine passive Smartifizierung kann als eine entsprechende Vorstufe mittels einem passiven intelligenten Bauelement wie beispielsweise einem NFC-Chip (dt. Nahfeldkommunikation, abgekürzt NFC) und/oder einem maschinenlesbaren Code vorgesehen sein. So kann eine Grundlage für eine automatisierte Erfassung oder für Änderungen und deren Auswirkungen auf die Funktion einer Maschine geschaffen werden. Die eindeutige, vorzugsweise eineindeutige Kennzeichnung in Verbindung mit dem Zugriff auf eine externe Datenbank kann das aktive Anreichern von Informationen und somit eine passive Smartifizierung ermöglichen.

Insbesondere werden über die Installationselemente Geräte der Maschine wie Aktoren und/oder Sensoren betrieben, also vorzugsweise angesteuert und/oder ausgelesen. Für den Betrieb der Geräte kann eine Steuerungsvorrichtung wie eine SPS (Speicherprogrammierbare Steuerung) vorgesehen sein, welche über die Installationselemente und Komponenten den elektrischen Betrieb der Geräte durchführen kann. Hierzu kann die Steuerungsvorrichtung mit den Komponenten in elektrischer Verbindung stehen.

Das Installationselement umfasst ein Kabel und/oder ein Bauteil, wobei das Kabel mindestens oder genau einen Steckverbinder aufweisen kann, und bevorzugt einseitig konfektioniert sein kann, d.h. einseitig einen weiblichen oder männlichen Stecker und an der anderen Seite ein offenes Ende aufweist. Alternativ, kann das Kabel auch zweiseitig konfektioniert sein, d.h. an jeder Seite weist das Kabel einen weiblichen oder männlichen Stecker auf.

Es ist erfindungsgemäß vorgesehen, dass die wenigstens eine Installationsinformation eine Installationsanweisung zur Unterstützung eines Benutzers wie einen Werker und/oder

Installateur bei der Installation umfasst. Die Installationsanweisung kann dabei auch eine Anleitung für die Installation umfassen, bspw. eine Schritt-für-Schritt-Anleitung.

Das Initiieren der Ausgabe umfasst zumindest einen der nachfolgenden Schritte:
- Initiieren einer Aktivierung eines Anzeigeelements wie einer Leuchtdiode an der elektrischen Komponente, um durch das Anzeigeelement eine Anschlussstelle, insbesondere einen Steckplatz, für das zu verbindende Installationselement anzuzeigen, wobei vorzugsweise durch die Aktivierung ein Aufleuchten des Anzeigeelements erfolgen kann,
- Initiieren einer Anzeige einer Anschlussstelle, insbesondere eines Steckplatzes, der elektrischen Komponente für das Installationselement auf einer Benutzeroberfläche eines Computers, wobei bevorzugt die Benutzeroberfläche einen digitalen Zwilling zumindest eines Teils der Maschine visualisiert, und vorzugsweise einen mechanischen und/oder einen elektrischen Aufbau des Teils der Maschine visualisiert,
- Initiieren einer Anzeige einer Anschlussstelle, insbesondere eines Steckplatzes, der elektrischen Komponente für das Installationselement mittels Erweiterter Realität,
- Initiieren einer akustischen Ausgabe der Installationsanweisung als eine Anweisung für den Benutzer, das Installationselement an eine bestimmte Anschlussstelle der elektrischen Komponente anzuschließen, wobei vorzugsweise die Anschlussstelle anhand der Installationsvorgabe ermittelt wird,
-

Dies ermöglicht eine unmittelbare Information des Benutzers durch die Installationsanweisung, in welcher Weise das Installationselement installiert werden soll. Bspw. kann durch ein Aufleuchten des Anzeigeelements die Anschlussstelle an der Komponente angezeigt werden, an welcher das Installationselement angeschlossen werden soll. Ferner kann es das Aufleuchten des Anzeigeelements ermöglichen, eine richtig oder falsch zugeordnete Anschlussstelle entsprechend anzuzeigen. Hierzu kann die Komponente mehrere der Anzeigeelemente aufweisen, welche entsprechenden Anschlussstellen der Komponente zugeordnet sind, z. B. durch eine benachbarte Anordnung an einem Anschlusselement.

Die Anschlussstelle, insbesondere ein Anschlussport, welche gemäß der Installationsvorgabe für den Anschluss des Installationselements mit dem empfangenen Identifikator vorgesehen ist, kann bspw. über den empfangenen Identifikator aus der Installationsvorgabe abgefragt werden. Hierzu kann die Installationsvorgabe eine elektronische Abfrage ermöglichen, z. B. mittels einer Datenbank und/oder eine Liste und/oder dergleichen.

Die Anzeige der Anschlussstelle auf der Benutzeroberfläche kann bspw. eine grafische Darstellung der Anschlussstellen der Komponente umfassen, wobei die Anschlussstelle, welche für den Anschluss des Installationselements mit dem empfangenen Identifikator vorgesehen ist, grafisch hervorgehoben wird.

Die Benutzeroberfläche kann eine grafische Benutzeroberfläche sein, welche auf einem Bildschirm vorzugsweise eines Computers dargestellt wird. Der Computer kann bspw. ein tragbarer Computer wie ein Laptop oder Tablet sein.

Die Anzeige mittels Erweiterter Realität (engl. Augmented Reality) kann bspw. dadurch erfolgen, dass eine VR (Virtual Reality) Brille durch einen Benutzer verwendet wird, um zusätzliche Informationen anzuzeigen, und/oder dass die Umgebung des Benutzers durch eine Kamera aufzeichnet und das Kamerabild verarbeitet wird, um zusätzliche Informationen in das Kamerabild einzubringen. Die zusätzlichen Informationen umfassen z. B. die Hervorhebung der Anschlussstelle, wenn in dem Kamerabild die physische Anschlussstelle der Komponente zu sehen ist.

Ferner kann auch eine akustische Ausgabe vorgesehen sein, welche z. B. eine Ansteuerung eines Lautsprechers umfasst. Die akustische Ausgabe kann bspw. eine Sprachausgabe sein, durch welche die Anschlussbezeichnung der Anschlussstelle gesprochen wird.

Es kann von Vorteil sein, wenn im Rahmen der Erfindung das Verfahren den folgenden weiteren Schritt umfasst: Ermitteln eines Verbindungszustands zwischen dem Installationselement und der elektrischen Komponente, um festzustellen, ob die Verbindung hergestellt wurde. Hierzu kann bspw. eine elektrische Verbindungsprüfung erfolgen, durch welche automatisiert festgestellt werden kann, ob das Installationselement und die elektrische Komponente eine elektrisch leitende Verbindung aufweisen. Je nach Konstruktion ist es denkbar, dass bei der Verbindung noch nicht unmittelbar ein Stromkreis geschlossen wird, insbesondere, wenn die Installation noch nicht abgeschlossen ist. Daher können auch zusätzliche oder alternative Möglichkeiten zur Ermittlung des Verbindungszustands vorgesehen sein. So kann das Ermitteln des Verbindungszustands ferner umfassen: Empfangen einer Installationsnachricht auf Basis einer Eingabe des Benutzers und/oder von der elektrischen Komponente. Die empfangene Installationsnachricht kann hierbei indizieren, dass die Verbindung des Installationselements mit der elektrischen Komponente, vorzugsweise mit einer angezeigten Anschlussstelle der elektrischen Komponente, hergestellt wurde. Entsprechend kann überprüft werden, dass diejenige Anschlussstelle, welche angezeigt wurde, auch tatsächlich mit dem Installationselement verbunden worden ist. Es ist möglich, dass durch das Feststellen der Herstellung der Verbindung, z. B. durch ein manuelles Quittieren eines Benutzers und/oder ein automatisches Quittieren durch ein Feststellen der Verbindung, wenn bspw. beide Seiten eines Kabels angeschlossen wurden, eine Dokumentation ausgelöst wird. Bei der Dokumentation wird bspw. eine Installationsdokumentation hinterlegt, wie nachfolgend noch mit weiteren Einzelheiten beschrieben wird. Diese Dokumentation kann ggf. wiederholt ausgeführt werden, z. B. bei jedem Quittieren einer Tätigkeit, um damit sukzessive die Dokumentation der Installation aufzubauen. Um einerseits die Installationsanweisungen für den Benutzer in der Maschine sichtbar zu machen und andererseits die Dokumentation der an der Komponente verrichteten Arbeiten im System dokumentieren zu können, ist es vorteilhaft, dass das System und vorzugsweise die erfindungsgemäße Vorrichtung mit den Komponenten kommunizieren kann. Im Nachgang der Installation und/oder Dokumentation kann optional auf Basis der Dokumentation die Steuerungsvorrichtung programmiert werden, und/oder die Komponente(n) konfiguriert werden. Aus diesem Umstand heraus kann es möglich sein, dass die Komponente zuvor nicht weiß, welche Aufgabe sie in der zukünftigen Maschine zu erledigen hat. Dies kann auch als "unkonfiguriert" bezeichnet werden.

Ein weiterer Vorteil im Rahmen der Erfindung ist erzielbar, wenn das Verfahren die folgenden weiteren Schritte umfasst:
- Verifizieren der Verbindung, vorzugsweise der verbundenen Anschlussstelle, anhand der Installationsvorgabe, vorzugsweise eines vorgegebenen, digitalen Schalt- und insbesondere Elektro-Anschlussplans, insbesondere, um festzustellen, ob ein Benutzer die Installationsinformation in der Form einer Installationsanweisung korrekt umgesetzt hat, wobei bevorzugt in Abhängigkeit von dem Verifizieren eine Kennzeichnung für die Installationsvorgabe hinterlegt wird, und besonders bevorzugt im Falle einer positiven Verifikation der nachfolgende Schritt durchgeführt wird:
   - Hinterlegen der Kennzeichnung der Anschlussstelle als korrekt verbundene Anschlussstelle in der Installationsvorgabe.

Vorteilhafterweise kann auf Basis der Ermittlung des Verbindungszustands die Verifizierung durchgeführt werden. Die Verifizierung ermöglicht damit die Beurteilung, ob der Benutzer der Installationsanweisung richtig gefolgt ist. Das Ergebnis der Verifikation kann genutzt werden, um die Kennzeichnung in der Installationsvorgabe zu hinterlegen. Somit kann die Installationsvorgabe zu einem späteren Zeitpunkt genutzt werden, um zu überprüfen, ob der Installationsvorgabe gefolgt wurde und/oder in welchem Umfang von der Installationsvorgabe bei der Installation abgewichen worden ist.

Sollte ein Benutzer von der Installationsanweisung abweichen, geschieht dies häufig aus einem relevanten Grund oder Anlass. Daher kann einem Benutzer die Möglichkeit bereitgestellt werden, bspw. über die Benutzeroberfläche und/oder eine Eingabevorrichtung wie eine Spracheingabe und/oder eine Tastatur und/oder eine Maus und/oder ein Touchscreen, einen Installationsparameter einzugeben. Vorteilhafterweise kann im Falle einer negativen Verifikation, wenn der Benutzer die Installationsanweisung also nicht korrekt umgesetzt hat, zumindest einer der nachfolgenden Schritte durchgeführt werden: Hinterlegen einer Kennzeichnung der Anschlussstelle als geänderte verbundene Anschlussstelle in der Installationsvorgabe, bevorzugt basierend auf einem vom Benutzer erfassten Installationsparameter, insbesondere einem Anlass oder Grund der Änderung, wobei vorzugsweise eine Angabe zum Anlass oder Grund der Änderung mit hinterlegt wird, und bevorzugt: Initiieren einer Korrektur der Verbindung gemäß der Installationsvorgabe. Die Korrektur kann bspw. dann eine Anpassung der Installationsvorgabe umfassen, wenn die neue Verbindung begründet ist und somit zur gewünschten Installation vorteilhaft beiträgt.

Optional kann weiter vorgesehen sein, dass das Verfahren den nachfolgenden weiteren Schritt umfasst, wobei der Schritt vorzugsweise bei dem Verifizieren der Verbindung durchgeführt wird:
- Validieren der, insbesondere verifizierten, Verbindung hinsichtlich einer vollständigen Herstellung der Verbindung, insbesondere einer ordnungsgemäßen Verschraubung und/oder Strom- und/oder Datenverbindung und/oder Kontaktierung, bevorzugt mittels einer von einem externen Prüfmittel, insbesondere einem Sensor oder einem Prüfwerkzeug, übermittelten Messgröße, um festzustellen, ob ein Benutzer eine vorgegebene Messgröße eingehalten hat.

Dies ermöglicht es, dass vorteilhafterweise abhängig von einer Installationsumgebung die jeweils gültigen oder erforderlichen Anforderungen an verwendete Materialien oder die Verbindung gewährleistet werden. Ferner hat dies den Vorteil, dass Sicherheitsrisiken bei der durchgeführten Installation von Maschinen deutlich gemindert werden. Die vorgegebene Messgröße kann dabei ein Referenzwert sein, welcher mit der übermittelten Messgröße als aktueller Messwert verglichen wird. Die Herstellung der Verbindung kann bspw. dann als ordnungsgemäß und/oder vollständig gelten, wenn die übermittelte Messgröße eine vordefinierte Bedingung wie einem Überschreiten des Referenzwertes erfüllt.

Des Weiteren kann vorgesehen sein, dass die wenigstens eine Installationsinformation eine Installationsanweisung zur Unterstützung eines Benutzers bei einem Wiederaufbau der Maschine umfasst, wobei vorzugsweise das Initiieren der Ausgabe zumindest den nachfolgenden Schritt umfasst: Initiieren einer Ausgabe einer Installationsreihenfolge mittels der wenigstens einen Installationsinformation für die Installation der Maschine. Die Installationsinformation kann z. B. eine Installationsanleitung umfassen, welche auch eine Reihenfolge der Installation angibt. Dies vereinfacht die Installation für einen Benutzer sowie beschleunigt die Installation, da eine aufwendige Interpretation eines Schalt- und insbesondere Anschlussplans zumindest teilweise nicht mehr erforderlich ist.

Gemäß einer vorteilhaften Weiterbildung der Erfindung kann vorgesehen sein, dass das Initiieren der Ausgabe eine Initiierung einer bidirektionalen Kommunikation mit der identifizierten Komponente über ein Bussystem umfasst. Die Ausgabe kann z. B. dadurch getriggert werden, dass eine bestimmte Nachricht, vorzugsweise ein Befehl, über die Kommunikation an die Komponente übertragen wird. Hierzu kann bspw. ein Computerprogramm durch eine Datenverarbeitungsvorrichtung ausgeführt werden, wobei die Datenverarbeitungsvorrichtung mit dem Bussystem verbunden ist.

Vorteilhafterweise kann bei der Erfindung vorgesehen sein, dass wenigstens eine der nachfolgenden Spezifikationen empfangen wird, vorzugsweise durch die Installationsnachricht, um basierend auf dem empfangenen Identifikator und der identifizierten Komponente einen digitalen Zwilling des Installationselements und/oder der elektrischen Komponente zu erstellen: Bauteiltyp, Maschinentyp, Anlagentyp, Benutzer, Anschlussstellenbezeichnung, Zeitstempel Datum und Uhrzeit, Installationsdauer, Adresse in einem Bussystem, Betriebsmittelkennzeichnung, Kabellänge, Portbelegung, Eigenschaften des offenen Kabels, Temperatur, Luftfeuchtigkeit, aktueller Projektstand bei der Montage, Planabweichung und Grund. Die wenigstens eine Spezifikation kann im Rahmen dieser Erfindung auch als Dokumentationsspezifikation bezeichnet werden.

Die Installationsnachricht kann z. B. auf Basis einer Eingabe eines Benutzers erzeugt worden sein, wobei der Benutzer in der Eingabe die wenigstens eine Spezifikation angegeben haben kann. Auch ist es möglich, dass die Spezifikation automatisiert ermittelt wird, z. B. durch die Komponente und/oder eine Datenverarbeitungsvorrichtung, insbesondere anhand des empfangenen Identifikators. Hierzu kann bspw. die wenigstens eine Spezifikation in der Komponente und/oder in dem Installationselement hinterlegt sein.

In einer weiteren Möglichkeit kann vorgesehen sein, dass die Installationsinformation eine Installationskonfiguration und/oder eine Installationsdokumentation umfasst, vorzugsweise für eine Demontage und/oder einen Wiederaufbau der Maschine, welche zur Dokumentation hinterlegt, vorzugsweise in einem Datenspeicher hinterlegt und/oder an die elektrische Komponente übertragen wird. Der Datenspeicher kann dabei als nicht-flüchtiger Datenspeicher ausgeführt sein, um eine spätere Auswertung der Installationskonfiguration und/oder der Installationsdokumentation zuverlässig zu ermöglichen. Dabei kann die Installationskonfiguration und/oder die Installationsdokumentation bspw. die hinterlegte Kennzeichnung basierend auf der Verifikation umfassen.

Ein weiterer Vorteil kann im Rahmen der Erfindung erzielt werden, wenn die Installationsinformation eine eindeutige Kennung umfasst, welche das Installationselement und/oder die identifizierte Komponente kennzeichnet, wobei die Installationsinformation in der Installationsvorgabe, insbesondere in einem digitalisierten Bauplan, vorzugsweise umfassend ECAD- und/oder MCAD-Daten, hinterlegt wird, und/oder wobei anhand des Identifikators das Installationselement aus einer Mehrzahl gleichartiger Installationselemente ausgewählt wird und/oder die identifizierte Komponente aus einer Mehrzahl gleichartiger Komponenten ausgewählt wird. Die Installationsvorgabe ermöglicht es damit, anhand der Kennung und/oder des Identifikators die Zuordnung der Installationselemente mit den Komponenten abzufragen. Hierzu kann die Installationsvorgabe eine Verknüpfung der Kennungen untereinander und/oder mit den Identifikatoren umfassen. Der Identifikator kann optional eindeutig einer der Kennungen der Installationselemente zugeordnet sein und/oder der Identifikator kann dieser Kennung entsprechen.

Ein weiterer Vorteil im Rahmen der Erfindung ist erzielbar, wenn die Installationsvorgabe eine vordefinierte Spezifikation über einen modularen und/oder dezentralen Aufbau der Maschine, insbesondere der Anlage, vorzugsweise basierend auf vorgegebenen ECAD-und/oder MCAD-Daten, umfasst, insbesondere über eine Verschaltung der Installationselemente in der Form von Kabeln und/oder Bauteilen mittels der Komponente in der Form von Verbindungsmodulen, vorzugsweise umfassend einen Elektro-Anschlussplan, wobei bevorzugt die Installationsvorgabe durch eine Verknüpfung der ECAD- und MCAD-Daten bestimmt wird. Damit kann die Installationsvorgabe einen digitalen Schaltplan und/oder Bauplan und/oder Installationsplan der Maschine umfassen.

Zudem ist im Rahmen der Erfindung denkbar, dass anhand des Identifikators eine Konfiguration der Komponente durchgeführt wird, um die Komponente von einem basiskonfigurierten Zustand, in welchem die Komponente vorzugsweise zur bidirektionalen Kommunikation mittels eines Bussystems konfiguriert ist und/oder eine funktionelle Ansteuerung durch eine Steuerungsvorrichtung, vorzugsweise eine SPS, ausgenommen ist, in einen Zustand mit erweiterter Konfiguration zur funktionellen Ansteuerung durch die Steuerungsvorrichtung überführt wird.

Der empfangene Identifikator ermöglicht es, zu erkennen, welches Installationselement mit der Komponente verbunden wurde (oder verbunden werden soll). Diese Erkennung kann genutzt werden, um eine für die Installation notwendige Konfiguration der Komponenten automatisiert durchzuführen, was den Konfigurationsaufwand an einer Komponente während der Installation deutlich reduziert. Bspw. wird anhand des empfangenen Identifikators und anhand der Installationsvorgabe bestimmt, welche der Komponenten mit dem Installationselement verbunden ist (oder wird). Entsprechend kann die Komponente für dieses Installationselement konfiguriert werden, sodass für die spätere funktionale Ansteuerung durch die Steuerungsvorrichtung der Steuerungsvorrichtung bekannt ist, dass das Installationselement mit dieser Komponente verbunden ist. Dies ermöglicht es der Steuerungsvorrichtung z. B., über diese Komponente und/oder das Installationselement wenigstens ein Gerät der Maschine wie einen Aktor und/oder Sensor zu betreiben. Ebenfalls Gegenstand der Erfindung ist ein System für eine computer-gestützte Installation von räumlich dezentral angeordneten elektrischen Komponenten einer Maschine, umfassend eine Detektionsvorrichtung, insbesondere einen Scanner wie ein Handscanner oder eine Kamera, für eine Bereitstellung eines Identifikators eines Installationselements, vorzugsweise eines Kabels oder eines Bauteils, ferner umfassend wenigstens eine elektrische Komponente, vorzugsweise in der Form eines Verbindungsmoduls zur Verbindung mit dem Installationselement und weiteren Installationselementen, und eine Vorrichtung zur Datenverarbeitung, umfassend Mittel zur Ausführung der Schritte eines erfindungsgemäßen Verfahrens. Damit bringt das erfindungsgemäße System die gleichen Vorteile mit sich, wie sie ausführlich mit Bezug auf ein erfindungsgemäßes Verfahren beschrieben worden sind.

Zudem kann eine Vorrichtung zur Datenverarbeitung, umfassend Mittel zur Ausführung der Schritte eines erfindungsgemäßen Verfahrens, ebenfalls Gegenstand der Erfindung sein. Die Vorrichtung kann dazu angepasst sein, mit den Komponenten, insbesondere Modulen der Maschine, insbesondere Anlage, zu kommunizieren, vorzugsweise ohne dass die Module vorkonfiguriert sind und/oder an eine Steuerungsvorrichtung angeschlossen sind.

Des Weiteren kann vorgesehen sein, dass der Identifikator in einem dem Installationselement zugeordneten, insbesondere an diesem angeordneten, maschinenlesbaren Code kodiert ist, wobei der maschinenlesbare Code mittels der Detektionsvorrichtung maschinenlesbar ist.

Darüber hinaus ist es möglich, dass die Komponenten und ein Computer und/oder eine Steuerungsvorrichtung über ein Bussystem jeweils zur bidirektionalen Kommunikation miteinander verbunden sind, wobei die bidirektionale Kommunikation auf Basis eines Kommunikationsprotokolls für ein Feldbussystem vorgesehen ist, insbesondere auf Basis eines ProfiNet-, Ethernet/IP-, EtherCAT oder 802.3-Standards, und/oder die bidirektionale Kommunikation kabelgebunden über ein Bussystem oder kabellos mittels Bluetooth oder WLAN,auf Basis eines Standards gemäß IEEE 802.11 oder auf Basis eines Mobilfunk-Telekommunikationsstandards vorgesehen ist.

Ebenfalls Gegenstand der Erfindung ist ein Computerprogramm, umfassend Befehle, die bei der Ausführung des Programms durch einen Computer, wie die erfindungsgemäße Vorrichtung zur Datenverarbeitung, diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Es kann vorgesehen sein, dass mehrere Benutzer die (gleichen) Verfahrensschritte simultan und/oder zumindest teilweise gleichzeitig durchführen. Die simultane und/oder zumindest teilweise gleichzeitige Ausführung von (gleichen) Verfahrensschritten durch mehrere Benutzer wird nachfolgend auch als Mehrbenutzeranwendung bezeichnet.

Ebenfalls kann ein weiteres Verfahren für eine computer-gestützte Installation von räumlich dezentral angeordneten elektrischen Komponenten einer Maschine Gegenstand der Erfindung sein, bei welchem die Installation von mindestens zwei Benutzern simultan und/oder zumindest teilweise gleichzeitig durchgeführt wird.

Im Zusammenhang mit einem erfindungsgemäßen Verfahren, insbesondere bei einer Mehrbenutzeranwendung und/oder bei dem weiteren Verfahren, kann eine Übergabe zwischen den unterschiedlichen Benutzern vorgesehen sein. Um eine Übergabe zwischen den, vorzugsweise beiden, Benutzern zu ermöglichen und einen optimalen Prozess zu gewährleisten, kann ein Bearbeitungsstand des jeweiligen Benutzers automatisch und in Echtzeit digital dokumentiert werden. So können die beiden oder auch mehrere Benutzer gleichzeitig an verschiedenen Bereichen der Maschine arbeiten, ohne die Integrität der elektrischen Installation zu gefährden oder langwierige Abstimmungsprozesse durchführen zu müssen.

Vorteilhafterweise ist vorgesehen, dass eine Anzeige des jeweils aktuellen Stands der Installation in Echtzeit durchgeführt wird. Ferner kann eine Installationsanweisung dem jeweiligen Benutzer zugeordnet und digital dokumentiert werden. Auf diese Weise können während des Installationsprozesses relevante Informationen gesammelt werden. Zu den erfassten Informationen zählen beispielsweise:
▪ Eine benutzerspezifische Kennung und Rolle (Zugriffs- und Bearbeitungsberechtigungen, ggf. Qualifikationslevel), und/oder
▪ Ein zuletzt verwendetes Verbindungselement und/oder eine zuletzt verwendete Komponente und/oder ein zuletzt verwendets Bauteil, und/oder
▪ Eine zuletzt bearbeitete Stelle, insbesondere Segment, der Maschine, an der das zuletzt verwendete Verbindungsmodul und/oder Bauteil und/oder die zuletzt verwendete Komponente angebracht wurde, und/oder
▪ Ein letzter Benutzer (eindeutige Benutzerkennung) sowie Zeitpunkt der letzten Bearbeitung des Benutzers, und/oder;
▪ Ein zuletzt identifiziertes Verbindungselement, vorzugsweise gescanntes Bauteil, und ein Maschinenbereich, für den das Verbindungselement bzw. Bauteil vorgesehen ist.

Es kann vorgesehen sein, dass mindestens zwei Benutzer die Installation von räumlich dezentral angeordneten, elektrischen Komponenten einer Maschine durchführen. Jeder Benutzer kann sich dabei über die Benutzeroberfläche eines Computers, vorzugsweise eines tragbaren Computers, anmelden und daraufhin beispielsweise einen zu bearbeitenden Arbeitsauftrag auswählen, um mit der Installation zur beginnen. Die Auswahl eines Arbeitsauftrags oder einer Installationsanweisung sperrt diese für die anderen Benutzer. Jeder der Benutzer kann dabei an einem eigenen Computer die Anmeldung und Auswahl durchführen. Dabei sind die Computer z. B. über ein Netzwerk miteinander und/oder mit einem Server verbunden, um die Auswahl miteinander zu synchronisieren.

Zur Identifizierung eines zur Installation geeigneten Installationselements, in der Form eines Bauteils oder Kabels, kann von jedem Benutzer eine Detektionsvorrichtung, insbesondere ein Scanner oder eine Kamera, als Lesegerät genutzt werden. Dadurch kann durch den jeweiligen Benutzer das jeweils verwendete Lesegerät mit dem aktuellen Auftrag des Benutzers elektronisch und datentechnisch verknüpft werden, um den individuellen Montagefortschritt dokumentieren zu können.

Es kann für jeden Benutzer eine eindeutige Kennung vorgesehen sein, um den Benutzer anhand der Kennung zu identifizieren. Die Kennung kann z. B. mit einem Benutzernamen verknüpft sein, welcher bei der Anmeldung durch den Benutzer angegeben wird. Mit der Anmeldung jedes einzelnen der mindestens zwei Benutzer unter Verwendung der benutzerbezogenen Kennung kann das Computerprogramm auf die benutzerbezogenen Daten zugreifen und die Installationsanweisung an den Benutzer gemäß seinen Fähigkeiten ausgeben. So können bei Erstbenutzern des Systems nur neue Daten erfasst oder gesammelt werden, um für wiederholte Benutzungen oder durchzuführende Installationen ein entsprechendes Profil zu erstellen. Durch eine Dokumentation der benötigten Zeit pro Montageschritt können Standardwerte ermittelt werden, um auf dieser Basis Benutzer gemäß ihren Fähigkeiten bei der Installation in "schnell/langsam/durchschnittlich" einzuteilen. Damit können vorab Berechtigungen oder Rollen für jeden Benutzer benutzerspezifisch angepasst werden. Ferner kann durch die hinterlegten Daten zum Ausbildungsstand des Benutzers die Detailtiefe der Anleitung angepasst werden. Durch eine Dokumentation von benutzerbezogenen Arbeitsschritten kann das Computerprogramm auf den letzten getätigten Installationsschritt zurückgreifen und dem Benutzer anzeigen.

Nach der Anmeldung kann die Installation an der Maschine begonnen oder an der letzten vom Benutzer bearbeiteten Komponente, insbesondere einem Segment, der Maschine fortgesetzt werden.

Durch die Identifikation eines Installationselements einer zur Installation geeigneten Komponente, in Form von Bauteilen und Kabeln mithilfe der Vorrichtung zur Datenverarbeitung, kann ggf. ein neuer Arbeitsschritt eingeleitet werden. Durch eine in der Installationsvorgabe hinterlegte Topologie sowie dem elektrischen Aufbau auf Basis der ECAD-Daten kann der initiierte Arbeitsschritt vorteilhafterweise eindeutig einem Bereich in der Maschine sowie innerhalb des Installationsplans zugeordnet werden.

Nach der Ausführung des Arbeitsschritts kann durch die manuelle und nutzerspezifische Bestätigung einer korrekten Montage der individuelle Montagefortschritt dokumentiert werden.

Nach der Bestätigung der korrekten Montage wird dieser Schritt im System unter Angabe der Benutzerkennung gespeichert, sodass im Falle eines Benutzerwechsels der letzte Stand eingesehen und weitergeführt werden kann.

Ebenfalls Gegenstand der Erfindung kann ein weiteres Verfahren für eine computer-gestützte Installation insbesondere elektrische, Installation von räumlich dezentral angeordneten und/oder elektrischen Komponenten einer Maschine, insbesondere einer Anlage, sein.

Vorteile und Merkmale, die im Zusammenhang mit dem Verfahren beschrieben sind, gelten auch im Zusammenhang mit den weiteren Verfahren, und jeweils umgekehrt.

Das weitere Verfahren kann dabei die nachfolgenden Schritte umfassen, welche vorzugsweise nacheinander oder in beliebiger Reihenfolge ausgeführt werden, wobei die Schritte auch automatisiert und/oder wiederholt und/oder zeitlich zumindest teilweise parallel ausgeführt werden können:
- Bereitstellen von mindestens oder genau zwei nutzerspezifischen Installationsvorgaben, welche eine Zuordnung mindestens eines Installationselements, vorzugsweise eines Kabels oder eines Bauteils, sowie mindestens einer elektrischen Komponente, vorzugsweise in der Form eines Verbindungsmoduls zur Verbindung mit dem Installationselement und weiteren Installationselementen, für die Installation und deren Funktionalität spezifizieren,
- Bereitstellen von mindestens oder genau zwei Anlagenspezifikationen, welche für Segmente, also bspw. Teile oder Stellen, der Maschine, vorzugsweise der Automatisierungsanlage, spezifisch sind,
- Optional: Bereitstellen wenigstens oder genau einer Installationsreferenz,
- Erzeugen von mindestens oder genau zwei nutzerspezifischen Installationsanweisungen zur simultanen Unterstützung von wenigstens zwei Benutzern, insbesondere Werkern oder Planern, für die Installation derselben Maschine, insbesondere Anlage, basierend auf der bereitgestellten Installationsvorgabe und/oder einer Installationsreferenz und/oder nutzerspezifischen Kriterien und/oder der Anlagenspezifikation.

In anderen Worten können Installationsanweisungen für mehrere Benutzer ausgegeben werden, damit die Benutzer zumindest teilweise gleichzeitig die Installation durchführen können. Es ist möglich, dass die Installationsanweisung nicht nur abhängig ist von dem Segment der Maschine, welches durch den jeweiligen Benutzer installiert wird, sondern noch von weiteren nutzerspezifischen Kriterien. Hierzu können wenigstens eine oder mehrere Installationsreferenz(en) und/oder nutzerspezifische Kriterien bereitgestellt werden.

In einer weiteren Möglichkeit kann vorgesehen sein, dass das Erzeugen von wenigstens einer der nutzerspezifischen Installationsanweisungen jeweils die nachfolgenden Schritte umfasst:
- Empfangen eines Identifikators eines der Benutzer, vorzugsweise einer eineindeutigen Kennung,
- Analysieren von mehreren bereitgestellten Installationsreferenzen hinsichtlich ihrer Eignung für die nutzerspezifischen Kriterien des Benutzers anhand einer vorgegebenen Eignungsvorschrift, insbesondere Montagehistorie, Montageeffizienz und Zugriffsberechtigungen des Benutzers, und
- Auswählen einer für den Benutzer geeigneten Installationsanweisung aus den analysierten Installationsreferenzen basierend auf der Analyse,
- Bereitstellen der wenigstens einen Installationsanweisung basierend auf der Analyse.

Ein weiterer Vorteil ist erzielbar, wenn das Erzeugen der wenigstens einen Installationsanweisung die nachfolgenden Schritte umfasst:
- Selektieren wenigstens eines der Segmente, insbesondere wenigstens einer Anlagenkomponente, der Maschine bzw. Automatisierungsanlage anhand der Anlagenspezifikation,
- Vergleichen des wenigstens einen selektierten Segments mit wenigstens einem Referenzsegment, insbesondere wenigstens einer Referenzkomponente, der bereitgestellten Installationsreferenz anhand einer vorgegebenen Installationsvorschrift, insbesondere Richtlinie, und
- Bereitstellen der wenigstens einen Installationsanweisung basierend auf dem Vergleich.

Zudem ist denkbar, dass das Vergleichen des wenigstens einen selektierten Segments die nachfolgenden Schritte umfasst:
- Analysieren von mehreren Referenzsegmenten der bereitgestellten Installationsreferenz hinsichtlich einer Eignung für das selektierte Segment;
- Auswählen eines für das selektierte Segment geeigneten Referenzsegments aus den analysierten Referenzsegmenten basierend auf der Analyse, und
- Vergleichen des selektierten Segments mit dem ausgewählten Referenzsegment anhand der vorgegebenen Installationsvorschrift.

Zusätzlich kann vorgesehen sein, dass das Bereitstellen der wenigstens einen Installationsanweisung die nachfolgenden Schritte umfasst:
- Identifizieren von Installationsanweisungen basierend auf dem Vergleich,
- Analysieren der jeweiligen identifizierten Installationsanweisung hinsichtlich einer Eignung als Installationsanweisung für das selektierte Segment,
- Auswählen wenigstens einer geeigneten Installationsanweisung aus den analysierten Installationsanweisungen basierend auf der Analyse.

Ein weiterer Vorteil ist erzielbar, wenn das weitere Verfahren die folgenden weiteren Schritte umfasst:
- Empfangen eines Identifikators eines Installationselements, vorzugsweise eines Kabels oder eines Bauteils,
- Analysieren, ob der empfangene Identifikator bereits empfangen wurde,
wobei bevorzugt im Falle eines positiven Analyseergebnisses der nachfolgende Schritt durchgeführt wird:
- Sperrung des Bereitstellungsvorgangs einer nutzerindividuellen Installationsvorgabe, wobei vorteilhafter Weise im Falle eines negativen Analyseergebnisses die nachfolgenden Schritte ausgeführt werden:
   - Bereitstellen einer nutzerindividuellen Installationsvorgabe, welche eine Zuordnung des Installationselements zur Verbindung mit einer elektrischen Komponente, vorzugsweise in der Form eines Verbindungsmoduls zur Verbindung mit dem Installationselement und weiteren Installationselementen, spezifiziert,
   - Identifizieren der elektrischen Komponente anhand der bereitgestellten Installationsvorgabe; und
   - Initiieren einer Ausgabe wenigstens einer Installationsinformation basierend auf dem empfangenen Identifikator, der identifizierten Komponente und der Nutzerinformation.

In einer weiteren Möglichkeit kann vorgesehen sein, dass die wenigstens eine Installationsinformation wenigstens zwei Installationsanweisungen zur Unterstützung von mindestens zwei Benutzern bei der Installation umfasst, wobei vorzugsweise das Initiieren der Ausgabe zumindest einen der nachfolgenden Schritte umfasst:
- Initiieren einer Aktivierung eines Anzeigeelements an der elektrischen Komponente, um durch das Anzeigeelement eine Anschlussstelle, insbesondere einen Steckplatz, für das zu verbindende Installationselement anzuzeigen;
- Initiieren einer Anzeige einer Anschlussstelle, insbesondere eines Steckplatzes, der elektrischen Komponente für das Installationselement auf einer Benutzeroberfläche eines Computers, wobei die Benutzeroberfläche ein digitales Modell zumindest eines Teils der Anlage visualisiert, und vorzugsweise einen mechanischen Aufbau des Teils der Anlage visualisiert;
- Initiieren einer Anzeige einer Anschlussstelle, insbesondere eines Steckplatzes, der elektrischen Komponente für das Installationselement mittels Erweiterter Realität,
- Initiieren einer Ausgabe einer nutzerspezifischen Installationsanweisung als Anweisung für einen einzelnen Benutzer, das Installationselement an eine bestimmte Anschlussstelle der elektrischen Komponente anzuschließen, wobei vorzugsweise die Anschlussstelle anhand der nutzerspezifischen Installationsvorgabe ermittelt wird,
- Initiieren einer akustischen Ausgabe, insbesondere einer Sprachausgabe, der Installationsanweisung.

Zudem ist denkbar, dass das weitere Verfahren die folgenden weiteren Schritte umfasst:
- Verifizieren der Verbindung, vorzugsweise der verbundenen Anschlussstelle, anhand der Installationsvorgabe, vorzugsweise eines vorgegebenen, digitalen elektrischen Anschlussplans, insbesondere, um festzustellen, ob ein Benutzer die Installationsinformation in der Form einer Installationsanweisung korrekt umgesetzt hat, wobei bevorzugt in Abhängigkeit von dem Verifizieren eine Kennzeichnung für die Installationsvorgabe hinterlegt wird, und

bevorzugt im Falle einer positiven Verifikation zumindest einer der nachfolgenden Schritte durchgeführt wird:
   - Hinterlegen einer Nutzeridentifikation zur Zuordnung der verbundenen Anschlussstelle zum jeweiligen Nutzer,
   - Hinterlegen eines Zeitstempels zur Erweiterung der Nutzerdaten und der Installationsreferenz,
   - Hinterlegen der Kennzeichnung der Anschlussstelle als korrekt verbundene Anschlussstelle im elektrischen Anschlussplan,
wobei vorteilhafterweise im Falle einer negativen Verifikation zumindest einer der nachfolgenden Schritte durchgeführt wird:
   - Hinterlegen einer Kennzeichnung der Anschlussstelle als geänderte verbundene Anschlussstelle im elektrischen Anschlussplan,
   - Hinterlegen der Nutzeridentifikation zur Zuordnung der geänderten verbundenen Anschlussstelle zum jeweiligen Nutzer,
   - Hinterlegen eines Zeitstempels zur Erweiterung der Nutzerdaten und der Installationsreferenz,
   - Initiieren einer Korrektur der Verbindung gemäß elektrischem Anschlussplan.

In einer weiteren Möglichkeit kann vorgesehen sein, dass die Installationsvorgabe eine Spezifikation über eine topologische Anordnung der elektrischen Komponenten umfasst, in welcher die elektrischen Komponenten miteinander verschaltet sind.

Ein weiterer Vorteil ist erzielbar, wenn wenigstens eine der nachfolgenden Spezifikationen empfangen wird, vorzugsweise durch die Installationsnachricht, um basierend auf dem empfangenen Identifikator und der identifizierten elektrischen Komponente. einen digitalen Zwilling des Installationselements und/oder der elektrischen Komponente zu erstellen: Bauteiltyp, Maschinentyp, Anlagentyp, Benutzer, Anschlussstellenbezeichnung, Zeitstempel Datum und Uhrzeit, Installationsdauer, Adresse in einem Bussystem, Betriebsmittelkennzeichnung, Kabellänge, Portbelegung, Eigenschaften des offenen Kabels, Temperatur, Luftfeuchtigkeit, aktueller Projektstand bei der Montage, Planabweichung und Grund Ein weiterer Vorteil kann erzielt werden, wenn die bereitgestellte Installationsreferenz zumindest teilweise eine oder mehrere der folgenden Referenzdaten umfasst:
- erste Referenzdaten bezüglich einer mechanischen Anordnung einer Referenzanlage, insbesondere MCAD-Daten,
- zweite Referenzdaten bezüglich einer elektrischen Verkabelung einer Referenzanlage, insbesondere ECAD-Daten,
- dritte Referenzdaten, umfassend ein oder mehrere Abbilder, vorzugsweise Scans, einer installierten Automatisierungsanlage oder Anlagekomponenten,
- vierte Referenzdaten, umfassend Anlagenumgebungsdaten;,
- fünfte Referenzdaten, umfassend historische Nutzerdaten, insbesondere Qualifikationsstand, Zugriffsberechtigungen, Nutzerkennung und historische Arbeitsgeschwindigkeit.

Ein weiterer Vorteil ist erzielbar, wenn das Verfahren zumindest einen der folgenden weiteren Schritte umfasst:
- Initiieren einer Speicherung der erzeugten wenigstens zwei Installationsanweisungen als ausgeführte Installation,
- Initiieren einer Speicherung der erzeugten wenigstens zwei Installationsanweisungen als weiteren Teil der bereitgestellten Installationsreferenz.

Ebenfalls kann ein (weiteres) System für eine computer-gestützte Installation insbesondere elektrische, Installation von räumlich dezentral angeordneten und/oder elektrischen Komponenten einer Maschine, insbesondere einer Anlage, umfassend:
- ein Lesevorrichtung für einen Identifikator eines Installationselements, vorzugsweise eines Kabels oder eines Bauteils,
- die elektrische Komponente, vorzugsweise in der Form eines Verbindungsmoduls zur Verbindung mit dem Installationselement und weiteren Installationselementen;
- eine Vorrichtung zur Datenverarbeitung, umfassend Mittel zur Ausführung der Schritte des Verfahrens.

In einer weiteren Möglichkeit kann vorgesehen sein, dass der Identifikator in einem dem Installationselement zugeordneten, insbesondere an diesem angeordneten, maschinenlesbaren Code kodiert ist, wobei der maschinenlesbare Code mittels einer einem Installateur durch eine eineindeutige Kennung zugeordneten Lesevorrichtung maschinenlesbar ist; und/oder wobei die Komponenten und ein Computer und/oder eine Steuervorrichtung über ein Bussystem jeweils zur bidirektionalen Kommunikation miteinander verbunden sind, wobei die bidirektionale Kommunikation auf Basis eines Kommunikationsprotokolls auf Basis eines ProfiNet-, Ethernet- oder 802.3-Standards vorgesehen ist und/oder die bidirektionale Kommunikation kabelgebunden über ein Bussystem oder kabellos mittels Bluetooth, oder WLAN, auf Basis eines Standards gemäß IEEE 802.11 oder auf Basis eines Mobilfunk-Telekommunikationsstandards vorgesehen ist.

### Kurzbeschreibung der Zeichnungen

Zum besseren Verständnis der Offenbarung wird auf die folgenden Zeichnungen verwiesen:
- Fig. 1:: Eine zentrale Verschaltung bei einer Maschine mittels eines Schaltschranks.
- Fig. 2:: Eine dezentrale Verschaltung gemäß Ausführungsbeispielen der Erfindung.
- Fig. 3: Eine schematische Darstellung von Teilen eines Systems gemäß Ausführungsbeispielen der Erfindung.
- Fig. 4: Eine schematische Darstellung von Einzelheiten eines Verfahrens gemäß Ausführungsbeispielen der Erfindung.
- Fig. 5: Eine schematische Darstellung von Schritten eines Verfahrens gemäß Ausführungsbeispielen der Erfindung.

### Beschreibung der Ausführungsbeispiele

Das Planen, Installieren und Einrichten von Maschinen sowie elektronischer Automatisierungstechnik ist eine komplexe Aufgabe. Dies gilt für zentralisierte Schaltschrank-Systeme ebenso, wie für dezentralisierte Systeme, in denen Steuerungsmodule direkt an den Anlagen angebracht werden. Die entsprechenden Prozesse werden von unterschiedlichen Personen, wie Anlagen-Planer, Elektro-Planer, Installateur, Anlagenprogrammierer etc. durchgeführt. Eine Besonderheit bei dezentralen Systemen ist die Verteilung der Module an verschiedenen Stellen einer Maschine im Vergleich zu den zentralisierten Schaltschrank-Systemen. Gerade bei größeren Maschinen kann eine simultane, das heißt zeitgleich parallel durch mehrere Benutzer ausgeführte Installation aus zeitlichen und logistischen Gründen vorteilhaft sein. Um einen reibungslosen Installationsprozess zu ermöglichen, soll der Arbeitsstand automatisch, benutzerindividuell und in Echtzeit digital dokumentiert werden. Über den ganzen Anlagen-Lebenszyklus ist es aus unterschiedlichen Gründen (wie z.B. Wartungsplanung, Systemdiagnosen) wichtig, über eine vollständige Dokumentation aller relevanten Informationen zu verfügen.

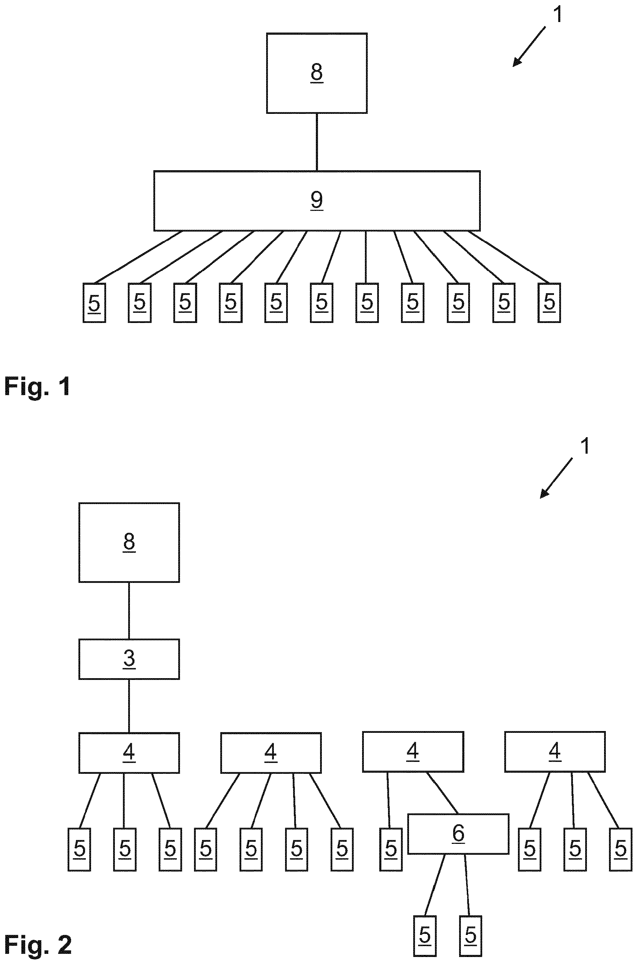

In Fig. 1 ist schematisch eine zentrale Verschaltung mittels eines Schaltschranks 9 dargestellt, um diese einer dezentralen Verschaltung mittels räumlich dezentral angeordneten, elektrischen Komponenten 4 einer Maschine 1 in Fig. 2 gegenüberzustellen. Anstelle einer Verbindung sämtlicher Geräte 5 wie Sensoren und Aktoren unmittelbar mit dem Schaltschrank 9 wie in Fig. 1 dargestellt, können bei der dezentralen Verschaltung in Fig. 2 mehrere Komponenten 4, also insbesondere Verbindungsmodule, eingesetzt werden. Diese ermöglichen, wie der Schaltschrank 9, eine Kopplung der Geräte 5 mit einer Steuerungsvorrichtung 8 wie einer SPS. Allerdings können die Verbindungsmodule 4 dezentral und verteilt in der Nähe zu den Geräte 5 vorgesehen sein. Die Verbindungsmodule 4 verschalten somit jeweils die Geräte 5 nur teilweise, wobei die Verbindungsmodule 4 zusammen oder beispielsweise ein und/oder mehrere Verbindungsmodule 4 über jeweils einen und/oder mehrere Hubs 6 die gesamte Verschaltung vornehmen. Um die Konfiguration und/oder Ansteuerung der Verbindungsmodule 4 zentral zu ermöglichen, kann ein Mastermodul 3 mehreren der einzelnen Verbindungsmodulen 4 vorgeschaltet sein. Ebenfalls ist es möglich, dass eine weitere Untergliederung der Verschaltung mittels wenigstens eines Hubs 6 erfolgt.

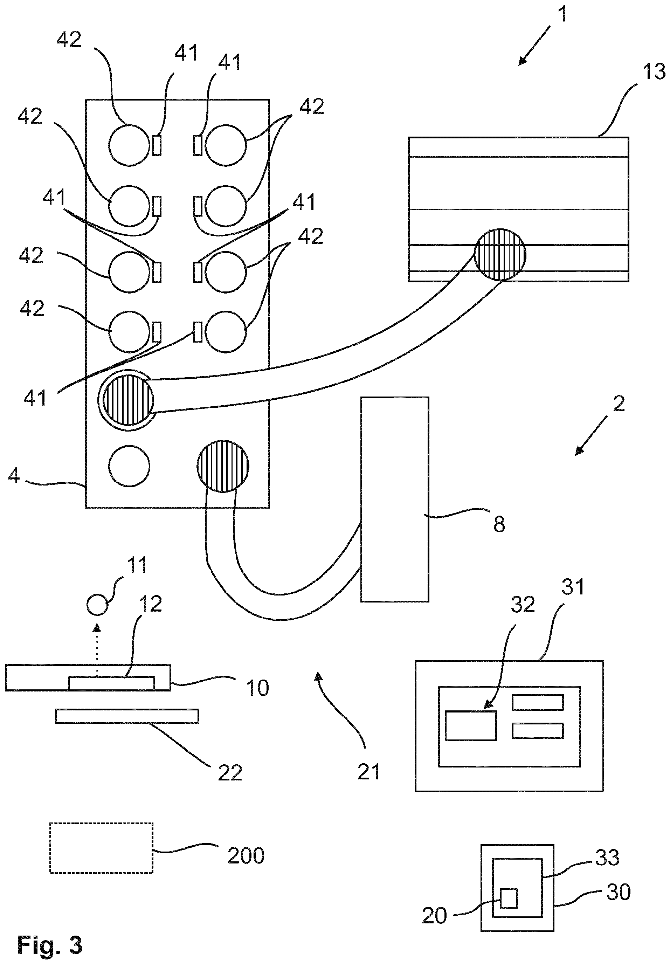

In Fig. 3 sind Teile eines Systems 2 gemäß Ausführungsbeispielen der Erfindung dargestellt, welches für eine computer-gestützte Installation von räumlich dezentral angeordneten elektrischen Komponenten 4 einer Maschine 1 vorgesehen sein kann. Das System 2 kann eine Detektionsvorrichtung 22, insbesondere einen Scanner 22 oder eine Kamera 22, für eine Bereitstellung eines Identifikators 11 eines Installationselements 10, eines Kabels 11 oder eines Bauteils 11, umfassen. Ferner kann das System 2 wenigstens eine elektrische Komponente 4, vorzugsweise in der Form eines Verbindungsmoduls 4 zur Verbindung mit dem Installationselement 10 und weiteren Installationselementen 10, aufweisen. Ebenfalls ist eine Vorrichtung 30 zur Datenverarbeitung Teil des Systems 2 , wobei diese Datenverarbeitungsvorrichtung 30 Mittel zur Ausführung der Schritte eines Verfahren 100 gemäß Ausführungsbeispielen der Erfindung umfassen kann.

Der Identifikator 11 kann in einem dem Installationselement 10 zugeordneten, insbesondere an diesem angeordneten, maschinenlesbaren Code 12 kodiert sein, wobei der maschinenlesbare Code 12 mittels der Detektionsvorrichtung 22 maschinenlesbar ausgeführt ist. Damit ist es für einen Benutzer möglich, mittels der Detektionsvorrichtung 22 den Code 12 einzuscannen und somit den Identifikator 11 an die Datenverarbeitungsvorrichtung 30 zu übertragen.

Ferner können die Komponenten 4 und wenigstens ein Computer 30, 31 und/oder eine Steuerungsvorrichtung 8 über ein Bussystem 21 jeweils zur bidirektionalen Kommunikation miteinander verbunden sein, wobei die bidirektionale Kommunikation auf Basis eines Kommunikationsprotokolls für ein Feldbussystem vorgesehen sein kann, insbesondere auf Basis eines ProfiNet-, Ethernet/IP- oder 802.3-Standards, und/oder die bidirektionale Kommunikation kabelgebunden über ein Bussystem 21 oder kabellos mittels Bluetooth oder WLAN, auf Basis eines Standards gemäß IEEE 802.11 oder auf Basis eines Mobilfunk-Telekommunikationsstandards vorgesehen sein kann. Um einen Betrieb der Komponente 4 zu ermöglichen, kann die Komponente 4 ferner mit einer Energieversorgung 13 verbunden sein.

Ferner ist ein Computerprogramm 20 dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

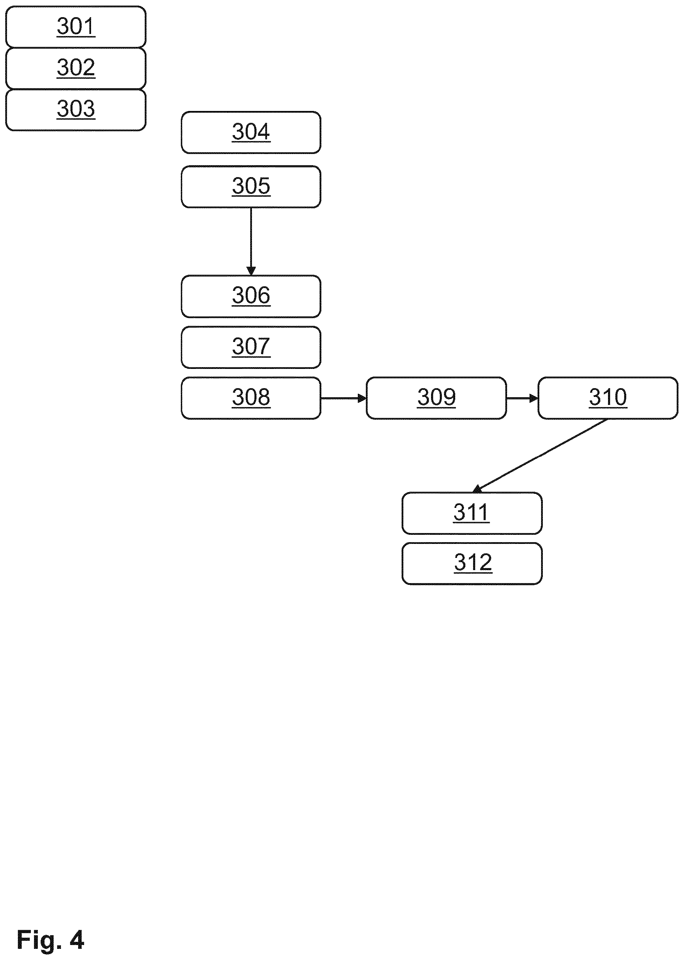

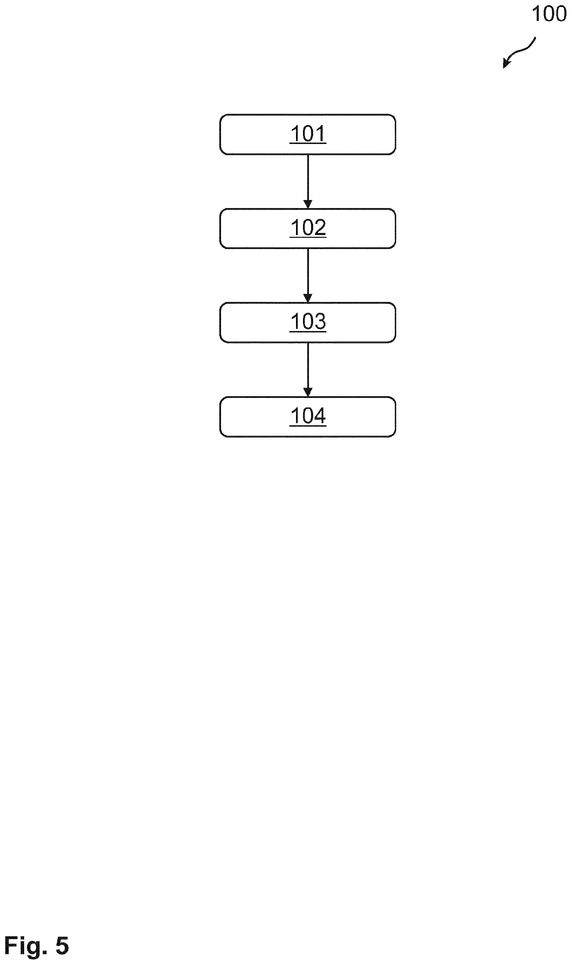

In Fig. 4 und 5 sind Verfahrensschritte des Verfahrens 100 visualisiert. Damit ist gemäß einem ersten Verfahrensschritt 101 ein Empfangen des Identifikators 11 des Installationselements 10 vorgesehen. Anschließend wird gemäß einem zweiten Verfahrensschritt 102 ein Bereitstellen 102 einer Installationsvorgabe 200 erfolgen, welche eine Zuordnung des Installationselements 10 zur Verbindung mit einer elektrischen Komponente 4, vorzugsweise in der Form eines Verbindungsmoduls 4 zur Verbindung mit dem Installationselement 10 und weiteren Installationselementen 10, spezifiziert. Sodann wird gemäß einem dritten Verfahrensschritt 103 ein Identifizieren der elektrischen Komponente 4 anhand der bereitgestellten Installationsvorgabe 200 durchgeführt.

Dann ist gemäß einem vierten Verfahrensschritt 104 ein Initiieren einer Ausgabe wenigstens einer Installationsinformation basierend auf dem empfangenen Identifikator 11 und der identifizierten Komponente 4 möglich. Die wenigstens eine Installationsinformation kann dabei eine Installationsanweisung zur Unterstützung eines Benutzers bei der Installation umfassen.

Das Verfahren 100 kann wenigstens eine der folgenden Unterstützungsmöglichkeiten bereitstellen:
- Unterstützung des Benutzers bei der Installation, insbesondere Verkabelung,
- Unterstützung des Benutzers bei der Dokumentation der Installation,
- Unterstützung des Benutzers beim Testing/automatisiertes Testing,
- Unterstützung des Benutzers bei der Demontage,
- Unterstützung des Engineerings bei der Planung,
- Unterstützung des SPS-Programmierers.

Das Initiieren der Ausgabe kann ein Initiieren einer Aktivierung eines in Fig. 3 dargestellten Anzeigeelements 41 an der elektrischen Komponente 4 umfassen, um durch das Anzeigeelement 41 eine Anschlussstelle 42, insbesondere einen Steckplatz 42, für das zu verbindende Installationselement 10 anzuzeigen. Alternativ oder zusätzlich kann das Initiieren der Ausgabe ein Initiieren einer Anzeige einer Anschlussstelle 42, insbesondere eines Steckplatzes 42, der elektrischen Komponente 4 für das Installationselement 10 auf einer Benutzeroberfläche 32 eines Computers 31 umfassen. Die Benutzeroberfläche 32 kann dabei einen digitalen Zwilling zumindest eines Teils der Maschine 1, und vorzugsweise einen mechanischen und/oder einen elektrischen Aufbau des Teils der Maschine 1 visualisieren. Weitere Alternativen oder zusätzliche Möglichkeiten zur Ausgabe sind eine Anzeige einer Anschlussstelle 42, insbesondere eines Steckplatzes 42, der elektrischen Komponente 4 für das Installationselement 10 mittels Erweiterter Realität und/oder eine Ausgabe der Installationsanweisung als eine Anweisung für den Benutzer, das Installationselement 10 an eine bestimmte Anschlussstelle 42 der elektrischen Komponente 4 anzuschließen, wobei vorzugsweise die Anschlussstelle 42 anhand der Installationsvorgabe 200 ermittelt wird. Darüber hinaus kann auch eine akustische Ausgabe der Installationsanweisung vorgesehen sein, sodass ein Benutzer ohne Sicht auf den Computer 31 der Installationsanweisung folgen kann. Hierbei wird z. B. eine Kennung der Komponente 4 und/oder der entsprechende Anschlussstelle 42 sprachlich ausgegeben.

Es ist zudem möglich, dass die Installationsinformation eine Installationskonfiguration und/oder eine Installationsdokumentation umfasst, welche in einem Datenspeicher 33 hinterlegt und/oder an die elektrische Komponente 4 übertragen wird.

Um Fehler in der Dokumentation zu vermeiden, die beim manuellen Eintragen der Informationen entstehen können, kann eine automatisierte Hinterlegung im System vorteilhaft sein. Dazu werden bspw. in den unterschiedlichen Dokumenten der Installationsvorgabe, wie beispielsweise dem Schaltplan oder dem Anschlussplan, sämtliche Informationen an der richtigen Stelle abgelegt. Die den jeweiligen Schritt ausführende Person muss die Eintragungen dann z. B. nur noch quittieren.

Zu den relevanten Informationen, welche die Installationsdokumentation umfassen kann, zählen beispielsweise:
- Welches Bauteil wurde verwendet (eindeutige, vorzugsweise eineindeutige Kennung)?
- An welcher Maschine und an welcher Stelle der Maschine wurde das konkrete Bauteil angebracht?
- Von wem wurde es wann angeschlossen?
- An welchem Port bzw. an welcher Anschlussstelle wurde das Kabel angeschlossen?
- Wie wurde das Kabel angeschlossen?
- Wurde das Bauteil ordnungsgemäß angeschlossen?
- Gab es Abweichungen zum Plan?

Durch die Installationsdokumentation kann z. B. wenigstens einer der folgenden Informationen dokumentiert werden: Arbeitsschritte des Benutzers mit Zusatzinformationen zu den Arbeitsschritten wie eine Bearbeitungsdauer, an welcher Maschine wird gearbeitet, welcher Benutzer, beispielsweise welcher Installateur oder Monteur, hat wann die Tätigkeiten durchgeführt, welches Bauteil ist verdrahtet und/ oder verkabelt worden, ist der Montageschritt abgeschlossen, welcher Port/welche Anschlussstelle wurde verwendet, existieren offene Kabel und was sind die Eigenschaften des offenen Kabels, z.B. Länge, Umgebungsparameter, z.B. Temperatur, Luftfeuchtigkeit, aktueller Projektstand, Schutzklasse, z.B. IP67, auch kann der Benutzer, insbesondere Werker, bei Planabweichungen den Grund der Planabweichung eingeben. Die Installationsdokumentation kann bspw. in einer Datenbank hinterlegt werden. Ein Benutzer kann ggf. mit physischen Handlungen (Tastendruck, Bildschirm, Doppelklick), die Dokumentation auslösen.

Ferner kann eine Auswerteeinheit vorgesehen sein, welche die dokumentierten Informationen, vorzugsweise die Bearbeitungsdauern des Benutzers zu den jeweiligen Arbeitsschritten, auswertet. Hierzu kann auch eine Methode einer künstlichen Intelligenz verwendet werden, welche bspw. die Ergebnisse der Auswerteeinheit optimiert. Die Ergebnisse zeigen dem Benutzer Optimierungspotenziale auf, um zukünftig eine Maschine effizienter zu gestalten, Komponenten oder Baugruppen zu optimieren und Auf- und Abbauabläufe zu verbessern. Ferner werden die Kommentare bei Planabweichungen berücksichtigt.

Dabei ist es auch möglich, dass die Dokumentation mit Komponenten funktioniert, welche nicht vorkonfiguriert oder an einer SPS angeschlossen sind. Dadurch werden Fehler vermieden, die durch die Verwendung äußerlich baugleicher, aber unterschiedlich konfigurierter Module entstehen können. Durch die Kommunikationsfähigkeit dieser Komponenten und durch die Integration sämtlicher relevanter Informationen kann das System auch dazu verwendet werden, den Benutzer bei der Installation der Automatisierungstechnik anzuleiten. Das systematische Sammeln und Dokumentieren aller relevanten Informationen, beispielsweise die verwendeten Komponenten, die Ausführung von Installations- und Wartungsaufgaben oder eingetretene Problemfälle, führen ferner zu gesichertem Wissen über den gegenwärtigen Systemzustand. Durch das automatisierte Erheben und Zuordnen dieser Informationen wird der Prozess deutlich beschleunigt und menschliche Installateure werden von der Dokumentationsaufgabe entlastet. Durch das automatisierte Erheben und Speichern von zu dokumentierenden Informationen kann das Risiko fehlender und/oder falscher Dokumentationen deutlich reduziert werden.

In Fig. 4 ist ein Verfahren 100 gemäß Ausführungsbeispielen der Erfindung mit weiteren Einzelheiten visualisiert. Über einen in Fig. 3 dargestellten Computer 31, wie ein Tablet oder Laptop, kann ein Benutzer zunächst eine Nutzeranmeldung 301 durchführen. Hierzu kann der Nutzer eine grafische Benutzeroberfläche 32 nutzen, welche durch den Computer 31 bereitgestellt wird. Ebenfalls über die Benutzeroberfläche 32 kann eine Projektauswahl 302 erfolgen, durch welche bspw. eine Installationsvorgabe 200 für ein gewünschtes Projekt geladen wird. Damit ist es möglich, einen Beginn 303 für eine Anleitung des Benutzers zur Installation der Maschine 1 mittels wenigstens einer Installationsanweisung einzuleiten.

Optional kann nach dem Beginn 303 zunächst eine Darstellung 304 des letzten ausgeführten Schrittes erfolgen, bspw. der letzten Installationsanweisung und/oder einer anderen Anweisung für die Installation. Zunächst kann eine Identifikation 305 eines Installationselements 10 durch den Benutzer erfolgen, wobei der Benutzer hierzu bspw. eine Detektionsvorrichtung 22 wie einen Handscanner zum Scannen eines Identifikationsmittels 12 am Installationselement 10 nutzt. Anhand des gescannten Identifikationsmittels 12 kann dann der Identifikator 11 ermittelt werden und an den Computer 31 und/oder eine Vorrichtung 30 zur Datenverarbeitung übertragen werden. Anhand des empfangenen Identifikators 11 und der Installationsvorgabe 200 kann dann die elektrische Komponente 4 und ihre Anschlussstelle 42 identifiziert werden, an welcher das Installationselement 10 angeschlossen werden soll. Hierzu umfasst die Installationsvorgabe 200 bspw. eine Matrix, in welcher verschiedene Installationselemente 10 den Komponenten 4 zugeordnet werden. Sodann kann dem Benutzer durch die Installationsanweisung mitgeteilt werden, welche der Komponenten 4 hierbei identifiziert wurde. Hierzu leuchtet bspw. ein Anzeigeelemente 41 an der Komponente 4 auf. Dies kann durch eine Signalübertragung 306 von der Datenverarbeitungsvorrichtung 30 an Komponente 4 ermöglicht werden. Anschließend kann durch den Benutzer eine Verbindung 307 zwischen dem Installationselement 10 und der Komponente hergestellt werden. Anhand der Installationsvorgabe 200 kann eine Bestätigung 308 der korrekten Montage erfolgen. Anschließend ist ggf. eine zumindest teilweise automatisierte Dokumentation 309 der korrekten Montage und Dokumentation 310 der Erledigung des Arbeitsschritts in der Installationsvorgabe 200 möglich. Dies kann z. B. durch eine Darstellung 311 in einer Maschinenübersicht mit einem grünen Haken oder z.B. durch ein Einblenden der betroffenen Verbindung in einem Elektroschaltplan erfolgen und dem Benutzer über die Benutzeroberfläche 32 dargestellt werden. Anschließend kann erneut eine Identifikation eines Installationselements 312 durchgeführt werden. Durch die Anleitung des Benutzers, insbesondere Werkers, bei der Installation der elektrischen Automatisierungstechnik und durch die automatisierte Prüfung, ob ein geeignetes Bauteil ordnungsgemäß angeschlossen wurde, kann eine fehlerfreie Herstellung des Systems sichergestellt werden.

Danach kann durch den Benutzer eine Verbindung zwischen dem Installationselement und einem Gerät, wie beispielsweise einem Aktor und/oder einem Hub und/oder einem Sensor, hergestellt werden (nicht abgebildet). Anhand der Installationsvorgabe 200 kann eine Bestätigung der korrekten Montage erfolgen. Anschließend ist ggf. eine zumindest teilweise automatisierte Dokumentation der korrekten Montage und Dokumentation der Erledigung des Arbeitsschritts in der Installationsvorgabe 200 möglich. Dies kann z. B. durch eine Darstellung in einer Maschinenübersicht mit einem grünen Haken oder z.B. durch ein Einblenden der betroffenen Verbindung in einem Elektroschaltplan erfolgen und dem Benutzer über die Benutzeroberfläche 32 dargestellt werden. Diese Arbeitsschritte entsprechen prinzipiell den Arbeitsschritten 307 bis 311.

Das System 2 kann ferner wenigstens eine Informationsschnittstelle aufweisen, um die Verfahrensschritte eines Verfahrens 100 bereitstellen zu können. Die wenigstens eine Informationsschnittstelle kann wenigstens eine der nachfolgenden Informationsschnittstellen zur Übermittlung von Informationen umfassen:
- Zwischen dem System 2 und dem Benutzer, insbesondere einen Werker und/oder einen Planer und/oder einen Programmierer, bspw. zur Übermittlung von Arbeitsanweisungen und/oder Projektständen und/oder zur Optimierung der Planung,
- Zwischen dem Benutzer und dem System 2, z. B. zur Übermittlung von Quittierungen der ausgeführten Arbeitsschritte und/oder Kommentare zu den ausgeführten Arbeitsschritten,
- Zwischen dem System 2 und den Komponenten 4,
- Zwischen dem System 2 über eine Komponente 4 zu einem oder mehreren Geräten 5 wie Aktoren und/oder Sensoren,
- Zwischen dem System 2 über eine Komponente 4 zu einem Hub 6.

Eine Übermittlung der Informationen kann als ein bidirektionaler Informationstransfer zwischen dem System 2 und den Komponenten 4 ausgeführt sein. Dieser kann durchgeführt werden, ohne dass die einzelnen Komponenten 4 an ein Steuerungssystem der Maschine 1 (SPS 8) angeschlossen und /oder für ihre zukünftige Aufgaben in der Maschine 1 vorkonfiguriert sind.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Offenbarung können auf einem Computersystem implementiert werden.

Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLIW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen der Erfindung umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist. Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Offenlegung ist daher ein Speichermedium (oder ein Datenträger oder ein computerlesbares Medium), auf dem das Computerprogramm zur Durchführung eines der hierin beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Erfindung ist ein Gerät, wie hierin beschrieben, mit einem Prozessor und dem Speichermedium.

Eine weitere Ausführungsform der Offenlegung ist daher ein Datenstrom oder eine Folge von Signalen, die das Computerprogramm zur Durchführung eines der hierin beschriebenen Verfahren darstellen. Der Datenstrom bzw. die Signalfolge kann beispielsweise so ausgestaltet sein, dass er bzw. sie über eine Datenkommunikationsverbindung, z.B. über das Internet, übertragen werden kann.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

### Liste der Bezugszeichen

- 1: Maschine, Anlage
- 2: System
- 3: Mastermodul
- 4: Modul, Switch, Komponente, Verbindungsmodul
- 5: Geräte, Sensor, Aktor
- 6: Hub
- 8: Steuerungsvorrichtung, SPS
- 9: Schaltschrank

- 10: Installationselement
- 11: Identifikator
- 12: Identifikationsmittel, maschinenlesbarer Code
- 13: Energieversorgung

- 20: Computerprogramm
- 21: Bussystem
- 22: Detektionsvorrichtung

- 30: Vorrichtung
- 31: Computer
- 32: Benutzeroberfläche
- 33: Datenspeicher

- 41: Anzeigeelement
- 42: Anschlussstelle, Steckplatz

- 100: Verfahren
- 101: erster Verfahrensschritt
- 102: zweiter Verfahrensschritt
- 103: dritter Verfahrensschritt
- 104: vierter Verfahrensschritt
- 200: Installationsvorgabe

- 301: Nutzeranmeldung
- 302: Projektauswahl
- 303: Beginn Anleitung
- 304: Darstellung letzter ausgeführter Schritt
- 305: Identifikation eines Installationselements, insbesondere Kabels
- 306: Signal an Komponente zum Aufleuchten des Anzeigeelements
- 307: Verbindung zwischen Kabel und Modul hergestellt
- 308: Bestätigung korrekte Montage
- 309: Dokumentation korrekte Montage
- 310: Dokumentation Arbeitsschritt erledigt
- 311: Darstellung Maschinenübersicht
- 312: Identifikation eines Installationselements

## Patentansprüche

1. Ein Verfahren (100) für eine computer-gestützte Installation von räumlich dezentral angeordneten, elektrischen Komponenten (4) einer Maschine (1) in der Form einer Anlage (1), umfassend die nachfolgenden Schritte:
Empfangen (101) eines Identifikators (11) eines Installationselements (10) in der Form eines Kabels oder eines Bauteils;
Bereitstellen (102) einer Installationsvorgabe (200), welche eine Zuordnung des Installationselements (10) zur Verbindung mit einer elektrischen Komponente (4) in der Form eines Verbindungsmoduls (4) zur Verbindung mit dem Installationselement (10) und weiteren Installationselementen (10) spezifiziert;
Identifizieren (103) der elektrischen Komponente (4) anhand der bereitgestellten Installationsvorgabe (200); und
Initiieren (104) einer Ausgabe wenigstens einer Installationsinformation basierend auf dem empfangenen Identifikator (11) und der identifizierten Komponente (4),
wobei die Schritte des Verfahrens automatisiert ausgeführt werden,
wobei die wenigstens eine Installationsinformation eine Installationsanweisung zur Unterstützung eines Benutzers bei der Installation umfasst, wobei das Initiieren der Ausgabe zumindest einen der nachfolgenden Schritte umfasst:
Initiieren einer Aktivierung eines Anzeigeelements (41) an der elektrischen Komponente (4), um durch das Anzeigeelement (41) eine Anschlussstelle (42) für das zu verbindende Installationselement (10) anzuzeigen;
Initiieren einer Anzeige einer Anschlussstelle (42) der elektrischen Komponente (4) für das Installationselement (10) auf einer Benutzeroberfläche (32) eines Computers (31), wobei die Benutzeroberfläche (32) einen digitalen Zwilling zumindest eines Teils der Maschine (1) visualisiert, und vorzugsweise einen mechanischen und/oder einen elektrischen Aufbau des Teils der Maschine (1) visualisiert;
Initiieren einer Anzeige einer Anschlussstelle (42) der elektrischen Komponente (4) für das Installationselement (10) mittels Erweiterter Realität;
Initiieren einer akustischen Ausgabe der Installationsanweisung als eine Anweisung für den Benutzer, das Installationselement (10) an eine bestimmte Anschlussstelle (42) der elektrischen Komponente (4) anzuschließen, wobei vorzugsweise die Anschlussstelle (42) anhand der Installationsvorgabe (200) ermittelt wird.

2. Das Verfahren (100) nach Anspruch 1, wobei das Verfahren (100) den folgenden weiteren Schritt umfasst:
Ermitteln eines Verbindungszustands zwischen dem Installationselement (10) und der elektrischen Komponente (4), um festzustellen, ob die Verbindung hergestellt wurde, wobei vorzugsweise das Ermitteln des Verbindungszustands umfasst:
Empfangen einer Installationsnachricht auf Basis einer Eingabe des Benutzers und/oder von der elektrischen Komponente (4),
wobei die empfangene Installationsnachricht indiziert, dass die Verbindung des Installationselements (10) mit der elektrischen Komponente (4), vorzugsweise mit einer angezeigten Anschlussstelle (42) der elektrischen Komponente (4), hergestellt wurde.

3. Das Verfahren (100) nach Anspruch 2, wobei das Verfahren (100) die folgenden weiteren Schritte umfasst:
Verifizieren der Verbindung, vorzugsweise der verbundenen Anschlussstelle (42), anhand der Installationsvorgabe (200), vorzugsweise eines vorgegebenen, digitalen Schalt-und insbesondere Elektro-Anschlussplans, insbesondere, um festzustellen, ob ein Benutzer die Installationsinformation in der Form einer Installationsanweisung korrekt umgesetzt hat, wobei bevorzugt in Abhängigkeit von dem Verifizieren eine Kennzeichnung für die Installationsvorgabe (200) hinterlegt wird, und besonders bevorzugt im Falle einer positiven Verifikation der nachfolgende Schritt durchgeführt wird:
Hinterlegen der Kennzeichnung der Anschlussstelle (42) als korrekt verbundene Anschlussstelle (42) in der Installationsvorgabe (200);
wobei vorteilhafterweise im Falle einer negativen Verifikation zumindest einer der nachfolgenden Schritte durchgeführt wird:
Hinterlegen einer Kennzeichnung der Anschlussstelle (42) als geänderte verbundene Anschlussstelle (42) in der Installationsvorgabe (200), bevorzugt basierend auf einem vom Benutzer erfassten Installationsparameter, insbesondere einem Anlass oder Grund der Änderung, wobei vorzugsweise eine Angabe zum Anlass oder Grund der Änderung mit hinterlegt wird; und bevorzugt:
Initiieren einer Korrektur der Verbindung gemäß der Installationsvorgabe (200).

4. Das Verfahren (100) nach einem der vorhergehenden Ansprüche, wobei die wenigstens eine Installationsinformation eine Installationsanweisung zur Unterstützung eines Benutzers bei einem Wiederaufbau der Maschine (1) umfasst, wobei vorzugsweise das Initiieren der Ausgabe zumindest den nachfolgenden Schritt umfasst:
Initiieren einer Ausgabe einer Installationsreihenfolge mittels der wenigstens einen Installationsinformation für die Installation der Maschine (1).

5. Das Verfahren (100) nach einem der vorhergehenden Ansprüche, wobei das Initiieren der Ausgabe eine Initiierung einer bidirektionalen Kommunikation mit der identifizierten Komponente (4) über ein Bussystem (21) umfasst.

6. Das Verfahren (100) nach einem der vorhergehenden Ansprüche, wobei wenigstens eine der nachfolgenden Spezifikationen empfangen wird, vorzugsweise durch die Installationsnachricht, um basierend auf dem empfangenen Identifikator (11) und der identifizierten Komponente (4) einen digitalen Zwilling des Installationselements (10) und/oder der elektrischen Komponente (4) zu erstellen: Bauteiltyp, Maschinentyp, Anlagentyp, Benutzer, Anschlussstellenbezeichnung, Zeitstempel Datum und Uhrzeit, Installationsdauer, Adresse in einem Bussystem (21), Betriebsmittelkennzeichnung, Kabellänge, Portbelegung, Eigenschaften des offenen Kabels, Temperatur, Luftfeuchtigkeit, aktueller Projektstand bei der Montage, Planabweichung und/oder Grund.

7. Das Verfahren (100) nach einem der vorhergehenden Ansprüche, wobei die Installationsinformation eine Installationskonfiguration und/oder eine Installationsdokumentation umfasst, vorzugsweise für eine Demontage und/oder einen Wiederaufbau der Maschine (1), welche in einem Datenspeicher (33) hinterlegt und/oder an die elektrische Komponente (4) übertragen wird.

8. Das Verfahren (100) nach einem der vorhergehenden Ansprüche, wobei die Installationsinformation eine eindeutige Kennung umfasst, welche das Installationselement (10) und/oder die identifizierte Komponente (4) kennzeichnet, wobei die Installationsinformation in der Installationsvorgabe (200), insbesondere in einem digitalisierten Bauplan, vorzugsweise umfassend ECAD- und/oder MCAD-Daten, hinterlegt wird, wobei anhand des Identifikators (11) das Installationselement (10) aus einer Mehrzahl gleichartiger Installationselemente (10) ausgewählt wird und/oder die identifizierte Komponente (4) aus einer Mehrzahl gleichartiger Komponenten (4) ausgewählt wird.

9. Das Verfahren (100) nach einem der vorhergehenden Ansprüche, wobei die Installationsvorgabe (200) eine vordefinierte Spezifikation über einen modularen und/oder dezentralen Aufbau der Maschine (1), insbesondere der Anlage (1), vorzugsweise basierend auf vorgegebenen ECAD- und/oder MCAD-Daten, umfasst, über eine Verschaltung der Installationselemente (10) in der Form von Kabeln und/oder Bauteilen mittels der Komponente (4) in der Form von Verbindungsmodulen (4), vorzugsweise umfassend einen Elektro-Anschlussplan, wobei bevorzugt die Installationsvorgabe (200) durch eine Verknüpfung der ECAD- und MCAD-Daten bestimmt wird.

10. Das Verfahren (100) nach einem der vorhergehenden Ansprüche, wobei anhand des Identifikators (11) eine Konfiguration der Komponente (4) durchgeführt wird, um die Komponente (4) von einem basiskonfigurierten Zustand, in welchem die Komponente (4) vorzugsweise zur bidirektionalen Kommunikation mittels eines Bussystems (21) konfiguriert ist und/oder eine funktionelle Ansteuerung durch eine Steuerungsvorrichtung (8), vorzugsweise eine SPS (8), ausgenommen ist, in einen Zustand mit erweiterter Konfiguration zur funktionellen Ansteuerung durch die Steuerungsvorrichtung (8) überführt wird.

11. Ein System (2) für eine computer-gestützte Installation von räumlich dezentral angeordneten, elektrischen Komponenten (4) einer Maschine (1) in der Form einer Anlage (1), umfassend
eine Detektionsvorrichtung (22), insbesondere einen Scanner (22) oder eine Kamera (22), für eine Bereitstellung eines Identifikators (11) eines Installationselements (10), in der Form eines Kabels oder eines Bauteils**,**
wenigstens eine elektrische Komponente (4) in der Form eines Verbindungsmoduls (4) zur Verbindung mit dem Installationselement (10) und weiteren Installationselementen (10);
eine Vorrichtung (30) zur Datenverarbeitung, umfassend Mittel zur Ausführung der Schritte des Verfahrens (100) nach einem der vorhergehenden Ansprüche.

12. Das System (2) nach Anspruch 11, wobei der Identifikator (11) in einem dem Installationselement (10) zugeordneten, insbesondere an diesem angeordneten, maschinenlesbaren Code (12) kodiert ist, wobei der maschinenlesbare Code (12) mittels der Detektionsvorrichtung (22) maschinenlesbar ist; und/oder
wobei die Komponenten (4) und ein Computer und/oder eine Steuerungsvorrichtung über ein Bussystem (21) jeweils zur bidirektionalen Kommunikation miteinander verbunden sind, wobei die bidirektionale Kommunikation auf Basis eines Kommunikationsprotokolls für ein Feldbussystem vorgesehen ist, insbesondere auf Basis eines ProfiNet-, Ethernet/IP- oder 801.3-Standards, und/oder die bidirektionale Kommunikation kabelgebunden über ein Bussystem (21) oder kabellos mittels Bluetooth oder WLAN, auf Basis eines Standards gemäß IEEE 802.11 oder auf Basis eines Mobilfunk-Telekommunikationsstandards vorgesehen ist.

13. Ein Computerprogramm (20), umfassend Befehle, die bei der Ausführung des Programms durch einen Computer (30) diesen veranlassen, die Schritte des Verfahrens (100) nach einem der Ansprüche 1 bis 10 auszuführen.

14. Eine Vorrichtung (30) zur Datenverarbeitung, umfassend Mittel zur Ausführung der Schritte des Verfahrens (100) nach einem der Ansprüche 1 bis 10.

## Claims

1. A method (100) for a computer-aided installation of spatially decentralized electrical components (4) of a machine (1) in the form of a plant (1),
comprising the following steps:
- Receiving (101) an identifier (11) of an installation element (10) in the form of a cable or a component;
- Providing (102) an installation specification (200) which specifies an assignment of the installation element (10) for connection to an electrical component (4) in the form of a connection module (4) for connection to the installation element (10) and further installation elements (10);
- Identifying (103) the electrical component (4) based on the provided installation specification (200); and
- Initiating (104) an output of at least one installation information based on the received identifier (11) and the identified component (4),
wherein the steps of the process are carried out automatically,
wherein the at least one installation information comprises an installation instruction to assist a user with the installation,
wherein initiating the output comprises at least one of the following steps:
- Initiating an activation of an indicator element (41) on the electrical component (4) in order to indicate a connection point (42) by means of the indicator element (41) for the installation element (10) to be connected to;
- Initiating a display of a connection point (42) of the electrical component (4) for the installation element (10) on a user interface (32) of a computer (31), wherein the user interface (32) visualizes a digital twin of at least a part of the machine (1), and preferably visualizes a mechanical and/or an electrical structure of the part of the machine (1);
- Initiating an indication of a connection point (42) of the electrical component (4) for the installation element (10) by means of augmented reality;
- Initiating an acoustic output of the installation instruction as an instruction for the user to connect the installation element (10) to a specific connection point (42) of the electrical component (4), the connection point (42) preferably being determined based on the installation specification (200).

2. The method (100) according to claim 1, wherein the method (100) comprises the following further step:
detecting a connection state between the installation element (10) and the electrical component (4) to determine whether the connection has been established, detecting the connection state preferably comprising:
Receiving an installation message based on an input from the user and/or from the electrical component (4),
wherein the received installation message indicates that the connection of the installation element (10) to the electrical component (4), preferably to an indicated connection point (42) of the electrical component (4), has been established.

3. The method (100) according to claim 2, wherein the method (100) comprises the following further steps:
Verifying the connection, preferably the connected connection point (42), based on the installation specification (200), preferably a predetermined, digital circuit diagram and, in particular, electrical connection diagram, in particular in order to determine whether a user has correctly implemented the installation information in the form of an installation instruction, wherein preferably an identification for the installation specification (200) is stored as a function of the verification, and particularly preferably the subsequent step is carried out in the event of a positive verification:
Storing the identification of the connection point (42) as a correctly connected connection point (42) in the installation specification (200);
wherein at least one of the following steps is advantageously carried out in the event of a negative verification:
Storing an identification of the connection point (42) as a changed connected connection point (42) in the installation specification (200), preferably based on an installation parameter acquired by the user, in particular an occasion or reason for the change, wherein preferably an indication of the occasion or reason for the change is also stored; and preferably:
Initiating a correction of the connection according to the installation specification (200).

4. The method (100) according to any one of the preceding claims, wherein the at least one installation information comprises an installation instruction for assisting a user in a reconstruction of the machine (1), preferably wherein initiating the output comprises at least the following step:
Initiating an output of an installation sequence by means of the at least one installation information for the installation of the machine (1).

5. The method (100) according to any one of the preceding claims, wherein initiating the output comprises initiating a bidirectional communication with the identified component (4) via a bus system (21).

6. The method (100) according to any of the preceding claims, wherein at least one of the following specifications is received, preferably by means of the installation message, to create a digital twin of the installation element (10) and/or the electrical component (4) based on the received identifier (11) and the identified component (4): Component type, machine type, plant type, user, connection point designation, time stamp date and time, installation duration, address in a bus system (21), equipment identification, cable length, port assignment, properties of the open cable, temperature, humidity, current project status during installation, deviation from plan and/or reason.

7. The method (100) according to one of the preceding claims, wherein the installation information comprises an installation configuration and/or an installation documentation, preferably for a disassembly and/or a reconstruction of the machine (1), which is stored in a data memory (33) and/or transmitted to the electrical component (4).

8. The method (100) according to one of the preceding claims, wherein the installation information comprises a unique label which labels the installation element (10) and/or the identified component (4), wherein the installation information is stored in the installation specification (200), in particular in a digitized construction plan, preferably comprising ECAD and/or MCAD data, wherein the installation element (10) is selected from a plurality of similar installation elements (10) and/or the identified component (4) is selected from a plurality of similar components (4) based on the identifier (11).

9. The method (100) according to one of the preceding claims, wherein the installation specification (200) comprises a predefined specification about a modular and/or decentralized structure of the machine (1), in particular of the plant (1), preferably based on predefined ECAD and/or MCAD data, via an interconnection of the installation elements (10) in the form of cables and/or components by means of the component (4) in the form of connection modules (4), preferably comprising an electrical connection diagram, the installation specification (200) preferably being determined by linking the ECAD and MCAD data.

10. The method (100) according to one of the preceding claims, wherein a configuration of the component (4) is carried out based on the identifier (11) in order to transfer the component (4) from a base-configured state, in which the component (4) is preferably configured for bidirectional communication by means of a bus system (21) and/or a functional control by a control device (8), preferably a PLC (8), is excluded, to a state with extended configuration for functional control by the control device (8).

11. A system (2) for a computer-aided installation of spatially decentralized, electrical components (4) of a machine (1) in the form of a plant (1), comprising
a detection device (22), in particular a scanner (22) or a camera (22), for providing an identifier (11) of an installation element (10) in the form of a cable or a component,
at least one electrical component (4) in the form of a connection module (4) for connection to the installation element (10) and further installation elements (10);
A data processing apparatus (30) comprising means for performing the steps of the method (100) according to any one of the preceding claims.

12. The system (2) according to claim 11, wherein the identifier (11) is encoded in a machine-readable code (12) associated with the installation element (10), in particular arranged thereon, wherein the machine-readable code (12) is machine-readable by means of the detection device (22); and/or
wherein the components (4) and a computer and/or a control device are each connected to one another via a bus system (21) for bidirectional communication, wherein the bidirectional communication is provided based on a communication protocol for a field bus system, in particular based on a ProfiNet, Ethernet/IP or 801.3 standard, and/or the bidirectional communication is provided in wired form via a bus system (21) or wirelessly by means of Bluetooth or WLAN, based on a standard in accordance with IEEE 802.11 or on the basis of a mobile telecommunication standard.

13. A computer program (20), comprising instructions which, when the program is executed by a computer (30), cause the computer (30) to perform the steps of the method (100) according to any one of claims 1 to 10.

14. An apparatus (30) for data processing, comprising means for performing the steps of the method (100) according to any one of claims 1 to 10.

## Revendications

1. Procédé (100) d'installation assistée par ordinateur de composants électriques (4), d'une machine (1) agencés de manière décentralisée dans l'espace sous la forme d'une installation (1), comprenant les étapes suivantes :
Réception (101) d'un identificateur (11) d'un élément d'installation (10) sous la forme d'un câble ou d'un composant ;
Mise à disposition (102) d'une consigne d'installation (200) qui spécifie une association de l'élément d'installation (10) pour une connexion à un composant électrique (4) sous la forme d'un module de connexion (4) pour une connexion à l'élément d'installation (10) et à d'autres éléments d'installation (10) ;
Identification (103) du composant électrique (4) à l'aide de la consigne d'installation (200) mise à disposition ; et
Initiation (104) d'une sortie d'au moins une information d'installation basée sur l'identificateur reçu (11) et le composant identifié (4),
les étapes du procédé étant exécutées de manière automatisée, ladite au moins une information d'installation comprenant une instruction d'installation pour aider un utilisateur au moment de l'installation, l'initiation de la sortie comprenant au moins l'une des étapes suivantes :
Initiation d'une activation d'un élément indicateur (41) sur le composant électrique (4) afin d'indiquer, par l'intermédiaire de l'élément indicateur (41), un point de raccordement (42) pour l'élément d'installation (10) à connecter ;
Initiation d'un affichage d'un point de connexion (42) du composant électrique (4) pour l'élément d'installation (10) sur une interface utilisateur (32) d'un ordinateur (31), l'interface utilisateur (32) visualisant un jumeau numérique d'au moins une partie de la machine (1), et visualisant de préférence une structure mécanique et/ou une structure électrique de la partie de la machine (1) ;
Initiation d'une indication d'un point de connexion (42) du composant électrique (4) pour l'élément d'installation (10) au moyen de la réalité étendue ;
Initiation d'une sortie
acoustique de l'instruction d'installation comme une instruction
pour l'utilisateur de raccorder l'élément d'installation (10) à un point de raccordement (42) déterminé du composant électrique (4), le point de raccordement (42) étant de préférence déterminé à l'aide de la consigne d'installation (200).

2. Procédé (100) selon la revendication 1, dans lequel le
procédé (100) comprend les étapes supplémentaires suivantes :
Détection d'un état de connexion entre l'élément d'installation (10) et le composant électrique (4) afin de déterminer si la connexion a été établie, comprenant de préférence la détection de l'état de connexion :
Réception d'un message d'installation sur la base d'une saisie de l'utilisateur et/ou du composant électrique (4), le message d'installation reçu indiquant que la connexion de l'élément d'installation (10) au composant électrique (4), de préférence à un point de raccordement indiqué (42) du composant électrique (4), a été établie.

3. Procédé (100) selon la revendication 2, dans lequel le procédé (100) comprend les étapes supplémentaires suivantes :
Vérification de la connexion, de préférence le point de raccordement (42) relié, à l'aide de la consigne d'installation (200), de préférence d'un plan de commutation numérique prédéfini et en particulier d'un plan de raccordement électrique, en particulier pour déterminer si un utilisateur a correctement mis en oeuvre l'information d'installation sous la forme d'une instruction d'installation, un marquage étant de préférence déposé pour la consigne d'installation (200) en fonction de la vérification, et l'étape suivante étant de préférence exécutée en cas de vérification positive :
Enregistrement de l'identification du point de raccordement (42) comme point de raccordement (42) correctement connecté dans la consigne d'installation (200) ;
au moins l'une des étapes suivantes étant avantageusement exécutée en cas de vérification négative :
Enregistrement d'une identification du point de raccordement (42) en tant que point de raccordement (42) connecté modifié dans la consigne d'installation (200), de préférence sur la base d'un paramètre d'installation saisi par l'utilisateur, en particulier d'un motif ou d'une raison de la modification, une indication du motif ou de la raison de la modification étant de préférence également enregistrée ; et de préférence :
Initiation d'une correction de la connexion selon la consigne d'installation (200).

4. Procédé (100) selon l'une des revendications précédentes, dans lequel ladite au moins une information d'installation comprend une instruction d'installation pour aider un utilisateur à reconstruire la machine (1), de préférence l'initiation de la sortie comprend au moins l'étape suivante :
Initiation d'une sortie d'un ordre d'installation au moyen de l'au moins une information d'installation pour l'installation de la machine (1).

5. Procédé (100) selon l'une des revendications précédentes, dans lequel l'initiation de la sortie comprend une initiation d'une communication bidirectionnelle avec le composant identifié (4) via un système de bus (21).

6. Procédé (100) selon l'une des revendications précédentes, dans lequel au moins l'une des spécifications suivantes est reçue, de préférence par le message d'installation, pour créer un jumeau numérique de l'élément d'installation (10) et/ou du composant électrique (4) sur la base de l'identificateur reçu (11) et du composant identifié (4) : Type de composant, type de machine, type d'installation, utilisateur, désignation du point de raccordement, horodatage date et heure, durée d'installation, adresse dans un système de bus (21), identification du matériel d'exploitation, longueur de câble, affectation des ports, caractéristiques du câble ouvert, température, humidité, état actuel du projet lors du montage, écart par rapport au plan et/ou raison.

7. Procédé (100) selon l'une des revendications précédentes, dans lequel l'information d'installation comprend une configuration d'installation et/ou une documentation d'installation, de préférence pour un démontage et/ou un remontage de la machine (1), qui est stockée dans une mémoire de données (33) et/ou transmise au composant électrique (4).

8. Procédé (100) selon l'une des revendications précédentes, dans lequel l'information d'installation comprend un identifiant unique qui caractérise l'élément d'installation (10) et/ou le composant identifié (4), l'information d'installation étant enregistrée dans la consigne d'installation (200), en particulier dans un plan de construction numérisé, comprenant de préférence des données ECAD et/ou MCAD, l'élément d'installation (10) étant sélectionné à l'aide de l'identificateur (11) parmi une pluralité d'éléments d'installation (10) de même type et/ou le composant identifié (4) étant sélectionné parmi une pluralité de composants (4) de même type.

9. Procédé (100) selon l'une des revendications précédentes, dans lequel la consigne d'installation (200) comprend une spécification prédéfinie sur une structure modulaire et/ou décentralisée de la machine (1), en particulier de l'installation (1), de préférence basée sur des données ECAD et/ou MCAD prédéfinies, sur un câblage des éléments d'installation (10) sous la forme de câbles et/ou de composants au moyen du composant (4) sous la forme de modules de connexion (4), comprenant de préférence un plan de raccordement électrique, la consigne d'installation (200) étant de préférence déterminée par une combinaison des données ECAD et MCAD.

10. Procédé (100) selon l'une des revendications précédentes, dans lequel, à l'aide de l'identificateur (11), une configuration du composant (4) est effectuée pour faire passer le composant (4) d'un état configuré de base, dans lequel le composant (4) est configuré de préférence pour une communication bidirectionnelle au moyen d'un système de bus (21) et/ou une commande fonctionnelle par un dispositif de commande (8), de préférence un API (8), est exclue, à un état avec une configuration étendue pour une commande fonctionnelle par le dispositif de commande (8).

11. Système (2) d'installation assistée par ordinateur de composants électriques (4) d'une machine (1) agencés de manière décentralisée dans l'espace sous la forme d'une installation (1), comprenant
un dispositif de détection (22), en particulier un scanner (22) ou une caméra (22), pour fournir un identificateur (11) d'un élément d'installation (10), sous la forme d'un câble ou d'un composant,
au moins un composant électrique (4) sous la forme d'un module de connexion (4) pour la connexion avec l'élément d'installation (10) et d'autres éléments d'installation (10) ;
un dispositif (30) de traitement de données comprenant des moyens pour mettre en oeuvre les étapes du procédé (100) selon l'une quelconque des revendications précédentes.

12. Système (2) selon la revendication 11, dans lequel l'identificateur (11) est codé dans un code (12) lisible par machine associé à l'élément d'installation (10), en particulier disposé sur celui-ci, le code (12) lisible par machine pouvant être lu par machine au moyen du dispositif de détection (22) ; et/ou
les composants (4) et un ordinateur et/ou un dispositif de commande étant reliés entre eux par l'intermédiaire d'un système de bus (21) respectivement pour une communication bidirectionnelle, la communication bidirectionnelle étant prévue sur la base d'un protocole de communication pour un système de bus de terrain, en particulier sur la base d'un standard ProfiNet, Ethernet/IP ou 801.3, et/ou la communication bidirectionnelle étant prévue par câble via un système de bus (21) ou sans câble au moyen de Bluetooth ou WLAN, sur la base d'une norme selon IEEE 802.11 ou sur la base d'une norme de télécommunication mobile.

13. Programme informatique (20) comprenant des instructions qui, lorsque le programme est exécuté par un ordinateur (30), amènent ce dernier à exécuter les étapes du procédé (100) selon l'une quelconque des revendications 1 à 10.

14. Dispositif (30) de traitement de données comprenant des moyens pour mettre en oeuvre les étapes du procédé (100) selon l'une quelconque des revendications 1 à 10.
